(19) Europäisches Patentamt
European Patent Office
Office européen des brevets

(11) **EP 3 908 512 B1**

(12) **FASCICULE DE BREVET EUROPEEN**

(45) Date de publication et mention
de la délivrance du brevet:
**03.07.2024 Bulletin 2024/27**

(21) Numéro de dépôt: **20704933.9**

(22) Date de dépôt: **08.01.2020**

(51) Classification Internationale des Brevets (IPC):
**B62M 6/55** *(2010.01)* **B62M 11/14** *(2006.01)*

(52) Classification Coopérative des Brevets (CPC):
**B62M 6/55; B62M 11/145**

(86) Numéro de dépôt international:
**PCT/FR2020/000004**

(87) Numéro de publication internationale:
**WO 2020/144419 (16.07.2020 Gazette 2020/29)**

(54) **DISPOSITIF D'ASSISTANCE ÉLECTRIQUE POUR VÉLO**

ELEKTRISCHE UNTERSTÜTZUNGSVORRICHTUNG FÜR EIN FAHRRAD

ELECTRIC ASSIST DEVICE FOR A BICYCLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.01.2019 FR 1900166**

(43) Date de publication de la demande:
**17.11.2021 Bulletin 2021/46**

(73) Titulaire: **Mavic Group**
**74650 Chavanod (FR)**

(72) Inventeurs:
• **MERCAT, Jean-Pierre**
**74650 Chavanod (FR)**
• **ALEXANDRE, Bérenger**
**74370 Pringy (FR)**
• **HUAT, François-Xavier**
**74000 Annecy (FR)**
• **FANTIN, Jérôme**
**74600 Seynod (FR)**

(74) Mandataire: **Innovincia et al**
**11, avenue des Tilleuls**
**74200 Thonon-Les-Bains (FR)**

(56) Documents cités:
**EP-A1- 0 743 238        WO-A1-2010/051681**
**CN-Y- 2 240 486        CN-Y- 201 161 693**
**GB-A- 2 312 403**

**Description**

L'invention concerne les vélos équipés d'un moteur d'assistance électrique. Plus particulièrement, l'invention concerne les moyens de transmission de couple entre le moteur d'assistance et la chaîne de transmission du vélo.

Avant d'aborder plus particulièrement la problématique de la présente invention, il convient de rappeler ici quelques éléments généraux sur les vélos à assistance électrique. La particularité de ce type de vélo est qu'il doit y avoir deux voies de transmission de puissance : une voie pédalier-roue qui transmet le couple généré par le cycliste, et une voie moteur-roue. Ces deux voies de transmission doivent pouvoir se superposer car par principe et pour répondre à la réglementation, le moteur ne doit fournir un couple à la roue que dans la mesure où le cycliste, lui-même, par l'intermédiaire du pédalier, fournit également un couple à la roue.

Différentes configurations de vélo à assistance électrique sont désormais disponibles, la présente invention concerne les vélos pour lesquels, le moteur d'assistance est placé dans la partie centrale du vélo en étant notamment intégré au pédalier.

Lors de l'utilisation d'un vélo à assistance électrique, différentes phases fonctionnelles distinctes sont à envisager : le pédalage sans assistance (phase 1), le pédalage avec assistance (phase 2), le pédalage à une vitesse de rotation supérieure à la vitesse de rotation maximale générée par le moteur (phase 3), l'arrêt brusque de pédalage par le cycliste (phase 4) et le rétro-pédalage (phase 5).

Lors du pédalage sans assistance, le comportement du vélo, pour le cycliste, doit ressembler le plus possible à celui d'un vélo sans moteur, c'est-à-dire que tout ce qui est nécessaire à l'assistance comme le moteur électrique, le réducteur mécanique ou tout autre organe de transmission ne doit ni rajouter des frottements supplémentaires, ni générer de bruit supplémentaire, ni rajouter d'inertie supplémentaire.

A cet effet, il est courant d'intercaler un dispositif de roue libre en série dans la voie de transmission entre le moteur et la roue. Les vélos traditionnels, c'est-à-dire, sans assistance électrique, sont d'ailleurs pratiquement tous déjà équipés de mécanisme de roue libre entre le pédalier et la roue. Par conséquent, il est nécessaire de prévoir deux dispositifs de roue libre, chacun étant placé dans une des deux voies de transmission distinctes : moteur-roue et pédalier-roue.

Il faut d'autre part noter qu'il existe deux grands principes de roue-libre, des roues-libres à cliquets qui sont légères mais ont tendance à être bruyantes et des roues-libres à friction transmettant le couple par adhérence avec l'avantage d'être silencieuses, d'avoir un très faible angle d'engagement mais ayant les inconvénients d'être lourdes et encombrantes, de nécessiter une très grande précision d'exécution les rendant assez onéreuses et ayant un couple de frottement résiduel souvent élevé en mode roue-libre de par la précontrainte d'engagement exercée sur les cames ou aiguilles de friction.

Lors du pédalage avec assistance (phase 2), la voie de transmission moteur-roue doit être opérationnelle. La voie de transmission pédalier-roue doit également être opérationnelle.

Dans le cas d'un vélo à moteur central, il est courant de concevoir le vélo de telle manière que la voie de transmission moteur-roue et la voie de transmission pédalier-roue partagent le plus d'éléments en commun. En général, le moteur et les pédales entraînent un plateau commun lequel est relié à la roue par une chaîne de vélo classique à maillons. Dans ce cas, le moteur doit pouvoir se connecter mécaniquement pour apporter un couple moteur d'assistance au niveau du pédalier ou du plateau. ,

Lorsque dans cette phase de pédalage avec assistance, le cycliste veut pédaler plus vite que la vitesse maxi du moteur, il faut que le moteur se déconnecte afin que le cycliste ne soit pas freiné par le moteur (phase 3). C'est pourquoi, une roue-libre simple est placée à la-sortie du moteur. En général, ces roues libres sont de deux types, à cliquet ou à galet.

Chacun de ces types de roue libre présente des inconvénients. Une roue libre à cliquet peut devenir bruyante alors qu'une roue-libre à galet sera certes silencieuse mais sera lourde et générera un couple de frottement plus élevé en phase de roue-libre.

Lorsque le cycliste veut s'arrêter de pédaler brutalement (phase 4), il faudrait pour des raisons de confort et de sécurité, que : Le temps de réaction de la coupure du moteur soit très court et que l'inertie du moteur et de sa chaîne de transmission soit réduite pour éviter de continuer à entraîner les jambes du cycliste ou continuer à faire avancer le vélo alors que le cycliste veut s'arrêter instantanément. Ce n'est malheureusement pas toujours ce qui se passe pour les vélos de l'art antérieur.

Par exemple, dans l'art antérieur US 9,616,969 et US 8,757,311 on retrouve comme sur la plupart des vélos à assistance électrique le plateau d'entraînement qui est entraîné de manière parallèle via une première roue-libre par le pédalier permettant de transmettre le couple de pédalage du cycliste et via une deuxième roue libre par le moteur d'assistance permettant de transmettre le couple d'assistance issu du moteur électrique. Avec une telle disposition, en cas d'arrêt brutal de pédalage par le cycliste, les jambes du cycliste ne seront pas entraînées en rotation car la première roue libre du pédalier se débrayera et il pourra s'arrêter immédiatement de pédaler. En revanche, le moteur continuera d'entraîner le vélo sur sa lancée le temps qu'il décélère ce qui peut être dangereux si le cycliste doit s'arrêter en urgence.

D'autre part, ces solutions présentent l'inconvénient relativement lourde et volumineuse car la mise en place d'un entraînement parallèle entre le moteur et le plateau et de la deuxième roue libre qui lui est associé nécessite la présence de pièces mécaniques supplémentaires. Il en résulte de plus, que ce genre de vélo à assistance électrique pâtit d'une esthétique générale peu avantageuse. Par exemple, le boîtier de pédalier présente un volume surdimensionné. Même si cette dernière caractéristique peut être considérée comme peu gênante pour un vélo tout terrain ou un vélo de ville, pour lesquels les codes esthétiques s'accommodent parfaitement avec des éléments ayant des volumes importants (cf. diamètre large des tubes de cadre), elle représente un handicap sérieux pour les vélos de course sur route pour lesquels légèreté, aérodynamisme, finesse sont importants et doivent être évaluable tant techniquement qu'esthétiquement.

Dans d'autres configurations, par exemple dans EP 2 502 819 le plateau n'est pas entraîné de manière parallèle par deux roues libres distinctes car le plateau se trouve en connexion directe avec les manivelles de sorte que lorsque le cycliste décide de s'arrêter de pédaler brusquement, il doit également arrêter toute la chaîne de transmission du moteur. Et comme l'arrêt de cette voie de transmission moteur demande un certain temps, les pédales vont continuer à tourner pendant ce court laps de temps et entraîner les jambes du cycliste. Il s'agit d'une sensation désagréable qui nuit au confort et à la qualité de l'expérience du cycliste. De plus lorsque le cycliste s'arrêtera brutalement de pédaler, il pourra créer un couple de freinage très élevé sur la chaîne de transmission du moteur pouvant conduire à sa dégradation ou sa rupture. Cette construction, se présente finalement comme la simple adaptation postérieure d'une assistance sur un vélo existant. Bien que l'esthétique générale du vélo puisse ne pas être beaucoup affectée dans ces configurations, les inconvénients en termes de confort d'utilisation et de fiabilité du système les rendent ni désirables, ni recommandables.

Il y a enfin une dernière phase fonctionnelle de l'utilisation d'un vélo à assistance électrique qui pose problèmes dans certaines configurations (phase 5). La première de ces configurations est lorsque le cycliste souhaite pédaler en marche arrière pour repositionner ses pédales, par exemple à l'approche d'un virage afin qu'elles ne viennent pas frotter contre la route ou lorsque le cycliste veut démarrer et positionner son pied d'appel en position sensiblement horizontale.

Il existe une deuxième configuration au cours de laquelle se produit une marche arrière, c'est lorsqu'on manoeuvre son vélo pour le ranger. En effet, si le vélo se déplace en marche arrière, la roue libre de transmission de la roue arrière va se bloquer et entraîner les pédales en marche arrière. Lors de cette phase, qu'on peut appeler rétropédalage, les vélos à assistance électrique comportant une roue libre simple, par exemple à cliquet, dans la voie de transmission moteur-roue, vont voir cette roue libre également se bloquer en marche arrière et par conséquent entraîner le moteur en marche arrière. La rotation du moteur en marche arrière génère un couple de frottement élevé et une inertie équivalente très élevée. Dans ce cas, le cycliste est capable de fournir un couple de rétropédalage élevé, ce qui va provoquer une accélération angulaire négative élevée et donc un couple négatif très élevé à cause de l'inertie équivalente importante du moteur, ce qui risque de détruire les engrenages du motoréducteur. D'autre part, sur ce type de motorisation, le rapport de réduction entre la vitesse de rotation du moteur et la vitesse de rotation de l'arbre de pédalier est de l'ordre de 100, ce qui réduit inévitablement le rendement de ce type de réducteur, le réducteur peut même devenir irréversible et se bloquer dès qu'un moindre défaut de lubrification ou d'usure apparaît et c'est pour cela que le brevet WO 2016/128789 intègre un limiteur de couple qui permet de déconnecter le moteur en cas de couple trop élevé pour éviter de rompre les dentures.

Cette phase de rétro pédalage est, de plus, souvent mise en oeuvre en magasin lors de l'achat du vélo. En effet il est usuel, chez un cycliste averti, de tourner les manivelles à l'envers pour estimer les pertes de frottement de la chaîne de transmission (incluant le frottement des joints et roulements de boîtier de pédalier, de la chaîne et de ses galets ainsi que des roulements de la roue libre arrière), ce qui permet d'estimer la qualité des frottements de la transmission. Lorsque l'on réalise cette expérimentation sur un VAE (vélo à assistance électrique) à roue libre simple, la roue libre se bloque en marche arrière et vient entraîner le moteur en marche arrière, comme le rapport de réduction entre le moteur et le pédalier est élevé, le moteur est donc entraîné en marche arrière à une vitesse de rotation élevée, augmentant ainsi la sensation d'inertie et générant un couple de frottement élevé due aux frottements mécaniques et électromagnétiques du moteur qui se retrouvent multipliés par le rapport de réduction élevé ainsi que par l'inverse du rendement du réducteur, rendant donc cette expérimentation de marche arrière très négative.

D'autre part, Les roue-libres utilisées dans les vélos à assistance électrique de l'art antérieur sont des roue-libres simples se bloquant lorsqu'un couple moteur positif est appliqué sur l'élément d'entrée (moteur d'assistance) et qui se trouve alors transmis à l'élément de sortie (l'arbre de pédalier). En revanche la roue-libre ne permet pas de transmettre un couple négatif en sens opposé sur le même élément d'entrée et se mettra alors à tourner librement dans ce sens de roue-libre. Ainsi tout se passe à souhait quand le sens de rotation est le sens normal d'utilisation, en revanche lorsque l'on inverse le sens de rotation sur l'élément de sortie, l'arbre de pédalier, tout s'inverse, c'est-à-dire que la roue-libre va se bloquer et transmettre du couple en marche arrière en entraînant ainsi toute la chaîne de transmission en marche arrière, ce qui présente les inconvénients listés ci-dessus.

En outre, les dispositifs d'assistance électrique apportant une assistance au pédalier comportent parfois un moteur dont l'axe est disposé en avant de l'axe du pédalier et un réducteur permettant de réduire la vitesse du moteur mais d'accroitre son couple. Le moteur est le plus souvent décalé de l'axe du pédalier car l'encombrement autour de l'axe du pédalier est très limité en largeur pour ne pas augmenter la largeur entre les manivelles mais aussi radialement (en diamètre) pour ne pas trop reculer la roue arrière afin que son pneu ait suffisamment de place pour ne pas frotter sur le carter externe du moteur. Le fait d'éloigner la roue arrière de l'axe du pédalier rend le vélo plus long et donc moins maniable et plus difficile à transporter et à stocker, mais a aussi pour effet de l'alourdir, Ces vélos à moteur décalé ont généralement un réducteur ayant un ou plusieurs trains d'engrenages en série ou utilisant une chaîne ou une courroie.

En revanche, certains vélos à assistance électrique possèdent un moteur coaxial à l'axe du pédalier dont le rotor a une forme tubulaire tournant de manière coaxiale autour de l'axe de pédalier de place que le pédalier et un réducteur de vitesse permettant d'augmenter le couple d'assistance.

D'autres exemples de ces dispositifs d'assistance pour un vélo sont connus des documents GB 2 312 403 A, WO 2010/051681 A1, CN 2 240 486 Y, CN 201 161 693 Y et EP 0 743 238 A1 dont le GB 2 312 403 A divulgue le préambule de la revendication 1.

Concernant plus particulièrement la présente invention, on doit rappeler que l'axe de pédalier d'un vélo est une pièce très importante du vélo puisqu'il permet : d'assurer le mouvement de pédalage du cycliste, en assurant la liaison pivot des deux manivelles droite et gauche, supportant toute la charge provenant du cycliste ; de supporter le ou les plateaux de la transmission par chaîne qui sont conventionnellement positionnés à droite ; et d'assurer la cohésion entre la manivelle droite et gauche en transmettant notamment le couple moteur fourni par la pédale gauche pour être transféré au plateau de transmission.

Depuis l'invention du vélo, l'axe et ses manivelles ainsi que les plateaux ont connu de très nombreuses améliorations dans le but d'alléger et/ou de rigidifier et/ou de rendre plus robuste tout cet ensemble.

Notamment, sur un pédalier de vélo de course actuel, le ou les plateaux sont directement encastrés au bras de la manivelle droite par quatre ou cinq vis pour optimiser la rigidité et la masse totale de l'ensemble, sachant que le plateau transmet l'intégralité de l'effort moteur à la chaîne, l'application de l'invention nécessite que le couple d'assistance soit apporté soit directement à la manivelle droite soit à la manivelle gauche en transitant par l'axe soit directement à l'axe.

Parmi les évolutions les plus récentes on peut notamment citer le brevet EP 1449760 qui décrit un.ensemble de manivelles comportant une manivelle droite liée rigidement à l'axe tubulaire du pédalier ainsi qu'aux plateaux de transmission et une manivelle gauche démontable fixée à l'extrémité gauche de l'axe tubulaire par l'intermédiaire de cannelures et de vis de serrage. Cette construction comportant un gros axe creux directement encastré dans la manivelle droite est plus légère que si l'on avait une liaison démontable, l'encastrement de la manivelle gauche sur l'axe se fait par des cannelures qui permettent aussi une translation axiale pour pouvoir ajuster le jeu des roulements du boîtier de pédalier avant d'immobiliser l'ensemble par les deux vis de serrage.

Cette solution technique a l'avantage d'être extrêmement légère tout en ayant une très grande rigidité et une grande robustesse, de plus son assemblage est simple et rapide permettant de gagner du temps lors de l'assemblage et/ou de l'entretien.

Malheureusement, cette solution ne peut pas s'appliquer pour les vélos à assistance électrique pour lesquels la puissance d'assistance est transmis directement à l'arbre de pédalier. En effet, les pédaliers de vélos à assistance électrique sont généralement composés d'un axe de pédalier central reliant les deux manivelles droite et gauche, sur cet axe central un tube périphérique est placé, lequel permet de transmettre le couple de transmission au plateau d'entrainement, ce couple étant la somme du couple du cycliste additionné du couple d'assistance (cf. réf. 30, figure 3, EP 2 724 926).

De plus, ces pédaliers sont souvent composés d'axes pleins et de manivelles indépendantes fixées aux extrémités de ces axes pleins par des moyens de fixation démontables. De telles montages qui sont sensiblement équivalents aux solutions techniques utilisées dans les vélos traditionnels il y a plus de 30 ans sont beaucoup plus lourds que les solutions optimisées des vélos d'aujourd'hui.

Actuellement, sur tous les systèmes d'assistance connus il n'est jamais possible de retirer simplement l'axe de pédalier axialement sans un démontage complet du boîtier de pédalier. En effet, le retrait de l'axe nécessite systématiquement l'ouverture du boîtier de pédalier et parfois le démontage de l'ensemble du dispositif d'assistance.

L'objectif de la présente invention est, d'une part, d'appliquer toutes les améliorations techniques qui ont été faites sur les pédaliers de vélos à la construction d'un vélo à assistance électrique pour optimiser sa légèreté, sa rigidité et sa robustesse. L'objectif de l'invention est, d'autre part, de faciliter le montage et la maintenance du pédalier sur un vélo à assistance électrique. Enfin, l'objectif de l'invention est aussi de standardiser le montage d'un pédalier traditionnel sur un vélo à assistance électrique pour réduire le nombre de référence à gérer pour toute l'industrie du cycle depuis le réparateur en magasin, en passant par l'assembleur du cycle et jusqu'au fabricant de pédalier.

L'objectif de l'invention est également de fournir un dispositif d'assistance électrique pour vélo qui tout en fonctionnant optimalement dans les différentes phases fonctionnelles décrites ci-dessus, n'alourdit pas ou peu le vélo, ne gêne pas le confort du cycliste et n'affecte le moins possible l'esthétique du vélo. L'objectif de l'invention est encore de proposer un dispositif d'assistance qui présente un fonctionnement silencieux et à frottement extrêmement réduit. L'objectif de l'invention est aussi de proposer un dispositif d'assistance qui soit le moins volumineux et le moins lourd possible.

L'objectif de l'invention est atteint par la fourniture d'un dispositif d'assistance pour un vélo comportant un moteur, un réducteur, une roue libre et un arbre solidaire en rotation avec une manivelle droite et une manivelle gauche ; ledit moteur étant coaxial à l'arbre et transmettant un couple d'assistance à l'arbre par l'intermédiaire de la roue-libre ; ledit dispositif étant prévu pour être logé à l'intérieur d'un boîtier de pédalier ; ledit arbre étant monté rotatif relativement audit boîtier grâce à deux roulements à billes ; ladite roue-libre étant constituée de plusieurs pièces placées entre le moteur et l'arbre ; le dispositif comprenant en outre une bague de transmission de couple permettant de solidariser l'une des pièces de la roue libre à l'arbre ou à l'une des manivelle ; ladite bague de transmission étant au moins partiellement placée sous l'un des deux roulements à billes.

L'objectif de l'invention est également atteint par la fourniture d'un dispositif d'assistance électrique possédant une ou plusieurs des caractéristiques suivantes, dans toute combinaison techniquement acceptable :

- La bague de transmission de couple comporte réalise une première liaison mécanique avec l'une des pièces de la roue-libre et une deuxième liaison mécanique avec l'arbre ou avec l'une des manivelles; et en ce qu'au moins une des deux liaisons mécaniques est désolidarisable de façon à retirer l'arbre.
- La bague de transmission est placée à proximité de la manivelle droite et la liaison mécanique désolidarisable est celle qui se trouve entre la bague et l'une des pièces de la roue libre.
- La roue libre comprend au moins un cliquet susceptible devenir en butée sur les dents d'un rochet et en ce que le rochet est solidarisable avec la bague de transmission par l'intermédiaire de cannelures.
- La bague de transmission comprend une portion cannelée et une portion de forme tronconique.
- La bague de transmission est fixée à l'arbre par collage, frettage ou par vis de pression radiale.
- La bague de transmission comprend une portion cylindrique prévue pour entourer l'arbre et un bras radial s'étendant depuis la portion cylindrique, ledit bras radial comportant des moyens de blocage avec la manivelle droite.
- La bague de transmission est placée à proximité de la manivelle gauche et la liaison mécanique désolidarisable est celle qui se trouve entre la bague et l'arbre ou la manivelle gauche.
- La bague de transmission comprend une première portion comportant une denture dont chacune des dents est susceptible de venir au contact d'un cliquet de la roue-libre et une deuxième portion comportant des moyens de blocage de la rotation avec la manivelle gauche ou avec l'arbre.
- Les moyens de blocage de la rotation comprennent une clavette.
- Les moyens de blocage de la rotation comprennent des cannelures internes aptes à coopérer avec des cannelures externes ménagée sur l'arbre.
- L'arbre et la manivelle droite constituent un sous-ensemble indépendant pouvant être désassembler du dispositif sans qu'il soit nécessaire de retirer les roulements à billes du dispositif.
- L'arbre a un diamètre D4 sensiblement constant sur toute sa longueur et en ce que ce diamètre est inférieur ou égal au diamètre intérieur D224 du roulement à bille placé à proximité de la manivelle droite.

Avantageusement, le dispositif selon l'invention permet de résoudre deux problèmes techniques majeurs des dispositifs d'assistance à moteur central : la transmission du couple d'assistance à l'axe et le maintien des pièces du dispositif lors du retrait de l'axe. En effet, si le couple d'assistance doit être transmis par l'axe au plateau, et non par une pièce supplémentaire reliée indépendamment au plateau, il est nécessaire de prévoir des moyens de transmission sur l'axe, lesquels peuvent constituer des protubérances radiales qui viennent en conflit avec les bagues de roulement à billes, car le boîtier de pédalier est fermé à ses deux extrémités par deux roulements à billes de diamètre identique. De plus, comme le mécanisme d'un boitier de moteur central est relativement complexe et comporte de nombreuses pièces coaxiales (roue-libre, roulements, entretoises, engrenages, moteur, capteur...), et que tout cela est conçu pour être logé dans un encombrement radial limité, l'axe, lui-même, est généralement un élément central indispensable au positionnement des différentes pièces. C'est pourquoi, le risque existe de voir tomber à l'intérieur du boîtier certaines des pièces adjacentes à l'axe lorsque ce-dernier est retiré, ce qui peut rendre le replacement de l'axe, ou le remplacement de celui-ci par un autre axe impossible ou difficile.

Dans un premier mode de réalisation, une bague de transmission de couple est encastrée sur l'arbre de pédalier, cette bague pouvant se trouver en appui sur l'épaulement de la manivelle droite Cette bague a des cannelures externes de forme complémentaire à des cannelures internes ménagées à l'intérieur du rochet de roue-libre. Son encastrement peut être réalisé par frettage.

Dans des variantes du premier mode de réalisation, l'encastrement peut être également réalisé par collage, goupillage, ajustée en pivot sur l'axe et arrêtée en rotation par un toc sur la manivelle (saillie tangente en appui sur la manivelle pour transmettre le couple) ou encore ajustée en pivot sur l'axe avec bras de reprise de couple fixé par vis ou goupillage.

Dans tous ces cas le diamètre intérieur du roulement côté droit (c'est-à-dire du côté des plateaux) doit être supérieur (ou égal) au diamètre de sommet de cannelures.

Par exemple pour un pédalier dont le diamètre de l'arbre est de 24 mm, le diamètre du sommet cannelures est de 29 mm, le diamètre intérieur du roulement côté droit est de 30 mm, le diamètre du roulement côté gauche doit être d'au moins 24 mm. Il doit néanmoins être de 25 mm ou 30 mm, à condition d'insérer une bague.

Dans un deuxième mode de réalisation de l'invention, la transmission de couple se fait par une bague de transmission qui va transmettre le couple du côté gauche (opposé aux plateaux), ladite bague comportant une clavette venant se connecter dans la fente de serrage de la manivelle gauche.

Dans des variantes du deuxième mode de réalisation de l'invention, la bague de transmission comporte des cannelures internes de forme complémentaires aux cannelures externes déjà présentes à l'extrémité de l'arbre pour la connexion de celui-ci avec la manivelle gauche.

L'invention sera mieux comprise à la lumière de la description qui suit. Le dessin qui y est annexé, comprend ;

[Fig. 1] La figure 1 est une vue d'ensemble d'un vélo intégrant un système d'assistance électrique selon un exemple de l'invention.

[Fig. 2] La figure 2 est une vue éclatée du boîtier de pédalier et du dispositif d'assistance selon un premier mode de réalisation de l'invention.

[Fig. 3] La figure 3 est une vue en coupe longitudinale du carter selon le plan A-A.

[Fig. 4] La figure 4 est une vue en coupe longitudinale du carter selon le plan B-B.

[Fig. 5a] La figure 5a est une vue en perspective partiellement coupée du réducteur.

[Fig. 5b] La figure 5b est une vue en perspective de la bague de transmission.

[Fig. 6] La figure 6 est une vue en coupe transversale selon le plan C-C.

[Fig. 7] La figure 7 est une vue en perspective d'un des disques.

[Fig. 8] La figure 8 est une vue en perspective des deux excentriques.

[Fig. 9] La figure 9 est une vue en perspective éclatée du joint de Oldham.

[Fig. 10] La figure 10 est une vue en perspective partiellement coupée du joint de Oldham.

[Fig. 11] La figure 11 est une vue en coupe transversale selon le plan D-D.

[Fig. 12] La figure 12 est une vue en coupe transversale selon le plan E-E.

[Fig. 13] La figure 13 est une vue en coupe transversale selon le plan F-F.

[Fig. 14] La figure 14 est une vue en perspective partielle d'une variante du premier mode de réalisation de l'invention.

[Fig. 15] La figure 15 est une vue en perpective sous un autre angle que la vue de la figure 14.

[Fig. 16] La figure 16 est une vue en perspective d'un dispositif d'assistance selon un deuxième mode de réalisation de l'invention.

[Fig. 17] La figure 17 est une vue en coupe longitudinale du dispositif selon le deuxième mode.

[Fig. 18] La figure 18 est une vue en perspective de la bague de transmission selon le deuxième mode.

[Fig. 19] La figure 19 est une vue en perspective d'une variante du deuxième mode de réalisation de l'invention.

[Fig. 20] La figure 20 est une vue en perspective de la bague de transmission selon la variante du deuxième mode.

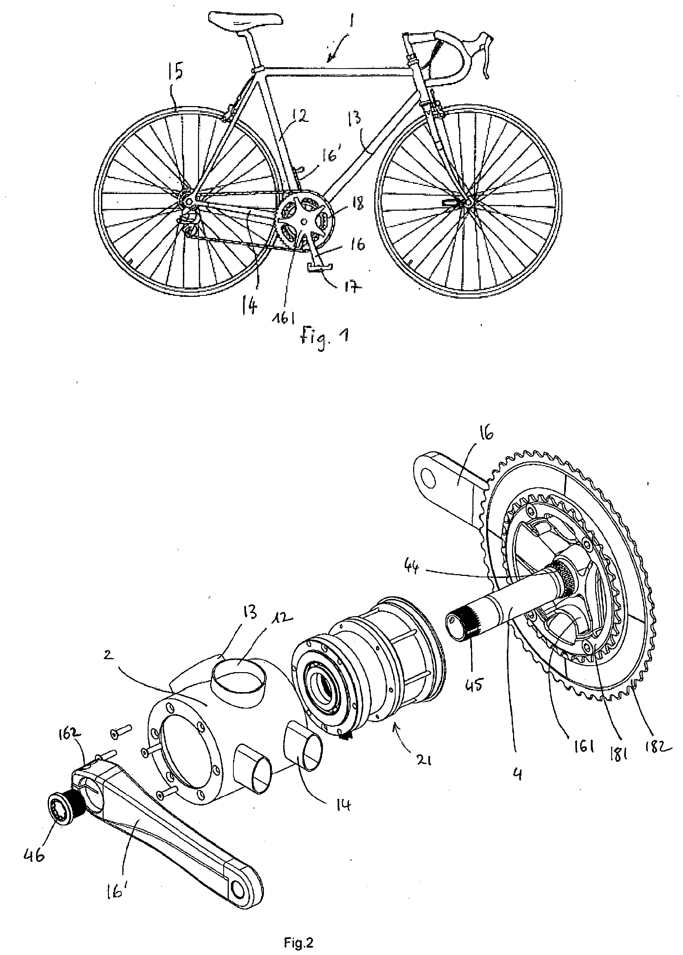

La figure 1 illustre un vélo 1 à assistance électrique intégrant un système d'assistance selon la présente invention. De manière connue, ce vélo comprend un cadre sur lequel sont fixées deux roues. La roue arrière 15 est motrice et est entraînée par le pédalier constitué d'une paire de manivelles 16, 16' et de deux pédales 17. La manivelle droite comprend une étoile de plateau 161 dont les extrémités servent à la fixation d'au moins une couronne de plateau dentée 181, 182. La chaîne de transmission 19 relie mécaniquement l'une des couronnes de plateau dentée 181, 182 à la roue arrière 15.

La figure 2 montre une vue éclatée du dispositif d'assistance selon un premier mode de réalisation de l'invention. Le boîtier de pédalier 2 qui fait partie intégrante du cadre et relie un certain nombre de tube qui le constitue. On peut voir la partie inférieure du tube oblique 13, la partie inférieure du tube de selle 12 et les extrémités antérieures des pattes arrière 14. Le carter 21 contenant un certain nombre des composants du dispositif d'assistance est prévu pour être logé à l'intérieur du boîtier de pédalier 2.

Le pédalier, lui-même, comporte la manivelle gauche 16', un sous-ensemble constitué de l'arbre 4, la manivelle droite 16 et l'étoile 161. La manivelle droite 16 comprend une extension appelée étoile de plateau 161 qui sert à la fixation des plateaux 180, 182 de chaîne. La manivelle droite 16 est de préférence fixée de manière permanente à l'arbre 4. L'arbre (4) à un diamètre extérieur D4, constant sur sensiblement toute sa longueur. Une bague de transmission de couple 44, appelée également bague cannelée 44, est fixée sur l'arbre à proximité de l'étoile 161.

Cette bague 44 réalise deux liaisons mécaniques. La première de ces liaisons mécanique est celle qui la relie à l'arbre 4 et la deuxième est celle qui la relie à la roue-libre 6. Dans le premier mode de réalisation de l'invention, la première liaison mécanique est permanente ou semi permanente, tans dis que la deuxième liaison mécanique est facilement désolidarisable, par exemple lorsque l'utilisateur souhaite changer de pédalier sans pour autant démonter intégralement le dispositif.

Une première façon d'intégrer cette bague 44 à l'arbre consister à la coller sur l'arbre 4 d'un pédalier standard en utilisant une colle à haute résistance au cisaillement comme par exemple une époxy bi-composants ou une colle anaérobie en ayant pris soin de préparer auparavant les surfaces suivant les règles de l'art, (dégraissage, sablage éventuel...). Cette solution a l'avantage de pouvoir être réalisée sur un pédalier standard du commerce avec des moyens de mise en oeuvre limités.

Cette bague cannelée peut également faire partie intégrante de l'arbre 4 ou de la manivelle droite en étant usinée directement dans cette dernière, dans ce cas l'arbre 4 doit être conçu et réalisé spécifiquement dès le départ pour être compatible avec l'invention.

Une troisième solution consiste à monter la bague 44 par frettage sur l'arbre 4 en s'assurant que le serrage entre l'arbre 4 et la bague cannelée soit toujours suffisant afin de transmettre le couple d'assistance avec une marge de sécurité. Ce montage fretté peut être associé à des stries longitudinales réalisées dans l'alésage de la bague cannelée afin d'augmenter le couple transmissible, cette solution nécessitant plusieurs centièmes de mm de serrage est envisageable sur un pédalier standard si les tolérances de l'arbre 4 sont suffisamment réduites. Ce montage fretté peut être facilité en refroidissant l'arbre 4 et chauffant la bague cannelée avant leur assemblage.

Dans une quatrième solution, cette bague cannelée 44 peut être simplement montée en pivot sur l'arbre 4 avec un jeu très réduit et disposer à son extrémité externe située contre la manivelle droite d'un disque ou d'au moins un bras radial, de préférence très plat pour minimiser l'encombrement axial, et dont l'extrémité du bras, distant radialement de l'axe central du pédalier, comporte une zone en saillie axiale coopérant avec une face ou une ouverture réalisée dans la manivelle droite ou l'étoile de pédalier afin de pouvoir assurer une liaison en rotation entre elles, capable de transférer le couple d'assistance. Cette variante sera décrite puis loin dans la description.

Afin de rendre cette dernière solution adaptable à de nombreux pédaliers standards du marché et sans intervention compliquée, la zone en saille axiale décrite ci-dessus peut être réalisée au moyen d'une pièce interchangeable rapportée sur le bras de la bague cannelée 44, cette dernière pouvant par exemple être réalisée en thermoplastique par impression 3D pour être parfaitement adaptée au design de la manivelle droite. De manière similaire, le disque situé à l'extrémité de cette bague cannelée 44 peut comporter un ou plusieurs trous coopérant avec des petites goupilles rapportées dans un ou plusieurs trous réalisés dans la face interne de la manivelle droite.

Des cannelures 45 sont ménagées à l'extrémité distale de l'arbre 4. Ces cannelures servent à la transmission de couple de la manivelle gauche 16' vers l'arbre 4. La manivelle gauche 16' est serrée contre l'arbre grâce à des vis 162 disposés perpendiculairement à l'axe de rotation du pédalier X. De manière connue, une vis 46 permet d'assurer un resserrement axial entre les 2 manivelles au travers de l'arbre 4, afin d'assurer une légère précharge axiale sur les roulements à billes.

De plus ce type de pédalier ayant une manivelle droite monobloc avec l'axe possède le gros avantage d'avoir un temps de maintenance et de montage extrêmement court permettant de réduire les coûts de montage et de réparation.

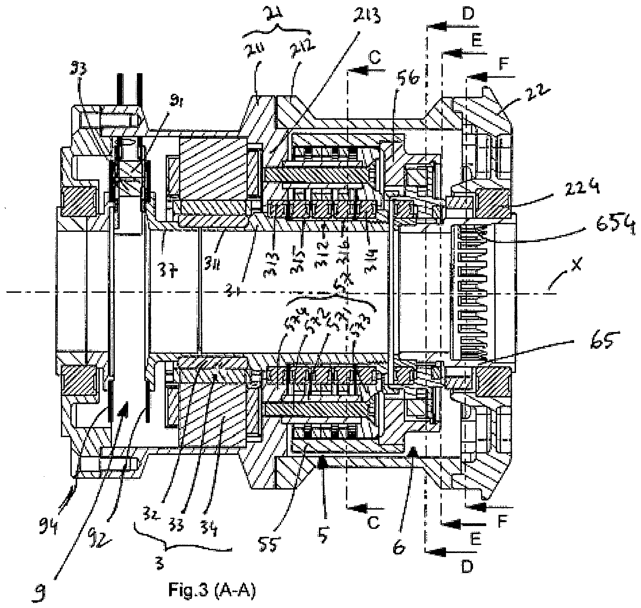

La figure 3 montre une coupe longitudinale dans le plan A-A du carter 21 et des différents composants qui y sont logés.

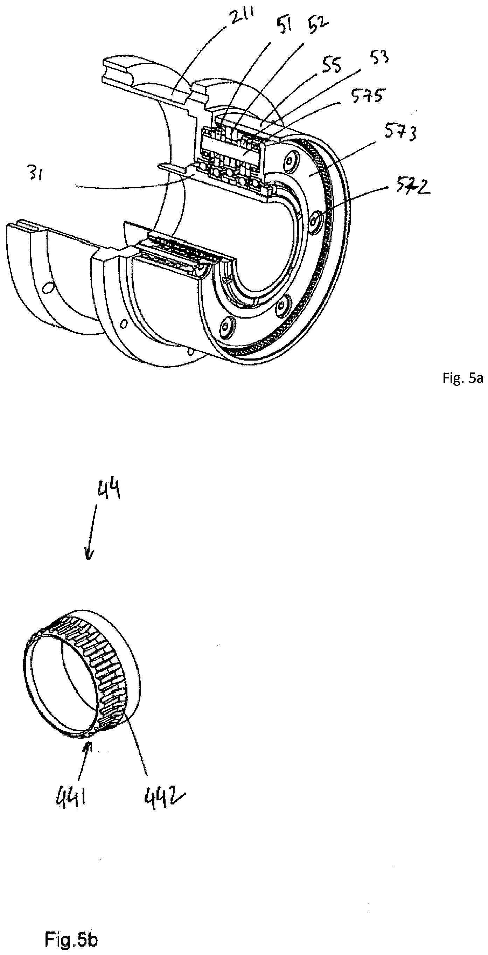

Le carter 21, prévu pour être logé à l'intérieur du boîtier 2, contient la majeure partie des éléments du dispositif d'assistance. Il est immobilisé à l'intérieur du boîtier par des vis ou tout autre moyen de fixation équivalent. Il est constitué de deux compartiments juxtaposés, chacun étant fermé par un couvercle. Le compartiment gauche 211 reçoit le moteur 3 et les moyens de mesure 9. Il est fermé, d'un côté, par le couvercle gauche 23 et de l'autre par la paroi centrale 213. Le compartiment droit 212 est fixé contre le compartiment gauche 211 au niveau de la paroi centrale 213. Il reçoit le réducteur 5 et la roue-libre 6. Il est fermé par le couvercle droit 22. La fixation du compartiment droit 212 et du couvercle 22 se fait grâce à des vis longues 222 (visibles en coupe à la figure 5) qui fixent le couvercle 22 à la paroi centrale 213 en prenant en sandwich le compartiment droit.

Des moyens de mesure 9 sont logés à l'intérieur du carter, ces moyens permettent notamment de contrôler et de commander le moteur. Un premier moyen de mesure placé sur le couvercle 22 qui ne sera pas décrit dans le détail permet de mesurer la composante horizontale de l'effort supporté par le roulement à billes 224 situé du côté du pédalier. Cette mesure de composante horizontale est principalement impactée par l'effort de chaîne et permet ainsi de déterminer l'effort de chaîne et donc de remonter au couple total transmis au niveau du pédalier, une autre demande de brevet de la demanderesse décrit comment le couple du cycliste peut ainsi être déduit d'une mesure de couple total, afin que le couple d'assistance soit sensiblement proportionnel au couple transmis par le cycliste.

Un second moyen de mesure est composé d'un premier capteur angulaire 91 associé à premier disque codeur 92 lié à la rotation de l'arbre de pédalier, il permet notamment de détecter la rotation du pédalier ainsi que son sens de rotation afin qu'aucun couple d'assistance ne soit apporté en cas d'action de rétropédalage comme le prévoit la norme en vigueur. Ce capteur sera utile essentiellement lorsque l'assistance ne sera pas active afin de connaître la vitesse et l'accélération du pédalage du cycliste, il sera particulièrement utile pour détecter le démarrage de l'assistance afin de pouvoir la démarrer rapidement, et également détecter l'arrêt du pédalage même si celui-ci pourra également être géré plus finement par un second capteur.

Un troisième moyen de mesure est composé également d'un deuxième capteur angulaire 93, associé à un deuxième codeur 94, lié à la rotation du moteur par l'intermédiaire d'une bague de mesure 37.

Un quatrième moyen de mesure qui se trouve cette fois externe au boitier en étant situé par exemple près de la roue arrière permet de capter la vitesse d'avancement du vélo afin de permettre de gérer la coupure du couple d'assistance lorsque la vitesse du cycle approche la limite de vitesse programmée afin de répondre à la législation en vigueur.

Le moteur 3 est un moteur électrique triphasé de type brushless multipolaire à rotor central comportant des aimants permanents, Il est alimenté par un contrôleur électronique de puissance lui-même alimenté par une batterie (non représentée) rapportée sur le cadre, ou logée à l'intérieur de celui-ci. Le rotor 32 est solidaire en rotation avec une bague de mesure 37 en regard d'un capteur fixe 93 par rapport au carter 21, permettant de mesurer précisément la position angulaire du rotor relativement au stator, cette information est nécessaire pour permettre au contrôleur de gérer parfaitement le pilotage électrique des 3 phases en fonction de la position du rotor mais aussi de la consigne de couple d'assistance à générer. Ce capteur peut être magnétique de type à effet hall ou à induction ou optique mais il est souhaitable d'avoir une résolution angulaire inférieure à 360/(6.n) ou n représente le nombre de paires de pôles du moteur, à titre d'exemple pour un moteur à 10 paires de pôles la résolution angulaire de ce capteur doit être bien inférieure à 6° afin de bien commuter les phases au bon endroit pour une commutation en trapèze, si l'on souhaite piloter le moteur avec une tension sinusoïdale il faudra alors encore accroître cette résolution par au moins un facteur cinq afin de bien phaser le signal sinusoïdal avec l'angle du rotor. L'accès à cette information angulaire très précise du rotor permet en outre de déterminer avec une très grande précision sa vitesse et son accélération angulaire qui sont lorsque le système d'assistance est actif, proportionnels aux vitesse et accélération angulaires du pédalier, la surveillance de ce signal permet donc d'optimiser l'asservissement du pédalage et notamment de détecter rapidement des phases d'arrêt brutal pour agir par exemple sur une procédure d'arrêt d'urgence.

Le moteur 3 est de forme générale annulaire avec un évidement central de diamètre supérieur à D4 de façon à permettre le passage de l'arbre 4 au travers de celui-ci. Le moteur 3, est constitué d'un stator 34 comportant les multiples bobinages des trois phases du moteur, à l'intérieur duquel tourne le rotor 32 ainsi que les aimants 33 fixés sur ce-dernier. Le rotor 32 est également solidaire en rotation avec l'organe moteur 31 dont la fonction est d'entraîner l'arbre 4 au travers du réducteur 5 et de la roue-libre 6. L'organe moteur 31 comporte une première portion 311 montée serrée dans le rotor et une deuxième portion 312 qui constitue la partie centrale du réducteur 5. Deux roulements à billes, 313 et 314 assurent le centrage de l'organe moteur 31 dans le carter 21. Deux excentriques 315 et 316 sont ajustés sur la deuxième portion 312 de l'organe moteur 31 et serrés axialement par un écrou 318 de sorte que le rotor 32, l'organe moteur 31 et les excentriques 315 et 316 soient parfaitement solidaires en rotation.

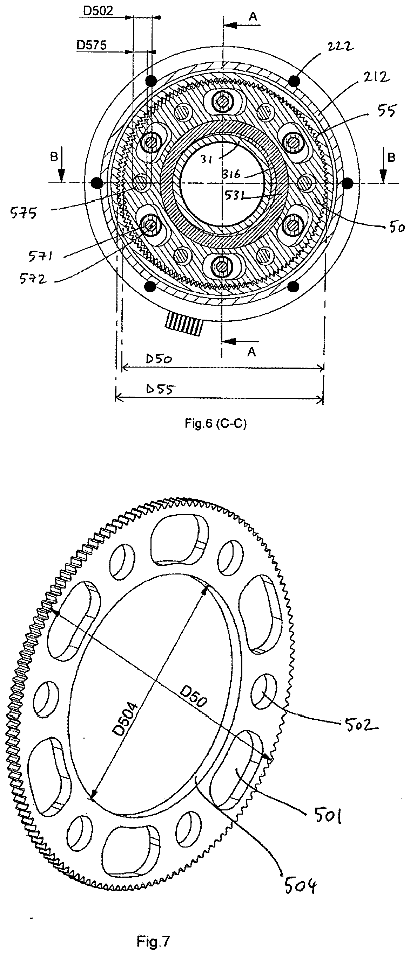

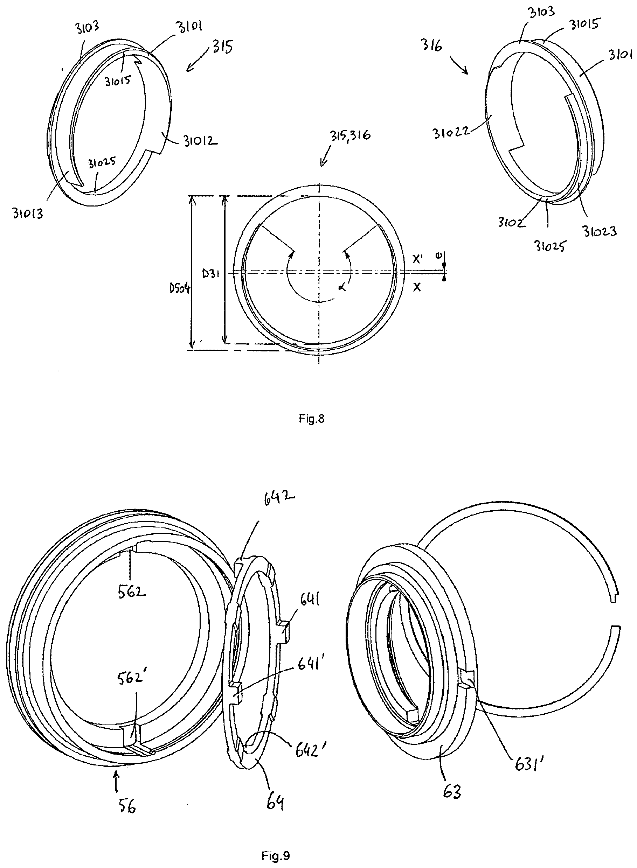

Les excentriques 315 et 316 sont identiques et représentés en perspective à la figure 8. Ils comportent une rondelle 3103 ayant sur chacun de ses flancs une came faisant saillie. Sur le premier flanc, la première came, appelée encore came latérale 3101 fait saillie sur une amplitude angulaire $\alpha$. Elle comprend une surface interne 31012 cylindrique de diamètre D31 et une surface externe 31013 cylindrique de diamètre D504, mais dont l'axe est excentré d'une valeur « e » par rapport à l'axe de la surface interne 31012. On pourra constater géométriquement que le diamètre extérieur D504 doit être supérieur ou égal à la somme du diamètre intérieur D31 et du double de l'excentration « e » (D504 $\geq$ D31 + 2e) pour que ces deux diamètres ne s'intersectent pas. Afin de minimiser l'encombrement radial du réducteur, il est préférable que le diamètre D504 soit juste égal (au jeu fonctionnel près) à la somme de D31 et du double de « e » (D504 = D31 + 2e), dans ce cas les diamètres intérieur D31 et extérieur D504 se retrouvent juste tangents minimisant ainsi l'encombrement radial, la tangence de ces deux diamètres est ainsi bien visible dans la coupe C-C de la figure 6.

En pratique, et pour limiter l'encombrement radial du dispositif d'assistance, il est judicieux de choisir un diamètre D504 de 30 mm.

La rondelle 3103 comporte sur son deuxième flanc, la deuxième came, appelée encore came centrale 3102 fait saillie sur une amplitude angulaire $\alpha$. Elle comprend une surface interne 31022 cylindrique de diamètre D31 et une surface externe 31023 cylindrique de diamètre D50, et excentrée d'une valeur « e » par rapport à l'axe de la surface interne 31022. L'apex 31015 de la came latérale 3101 et l'apex 31025 de la came centrale 3102 sont diamétralement opposé, cela revient à dire que les deux cames 3101 et 3102 se trouvent déphasées par rapport à l'axe de leur alésage D31 de 180°, c'est-à-dire d'un demi-tour.

On peut noter que l'épaisseur, dans le sens radial, des cames 3101 et 3102, est variable et qu'elle comporte une valeur minimale à ses deux extrémités angulaires, pour des questions de réalisation technique il est très délicat de terminer par une languette trop fine et trop fragile pour être réalisée ou même manipulée, c'est pourquoi il est préférable de limiter l'angle $\alpha$ afin que l'épaisseur minimale des cames soit supérieure à quelques dixièmes de millimètres. L'angle $\alpha$ (Alpha) est supérieur à 180° et peut atteindre la valeur de 360°. Dans ce dernier cas, les cames latérale et centrale font saillie depuis toute la circonférence des flancs de la rondelle. Plus l'angle $\alpha$ est petit, plus les excentriques seront légers, mais moins bon sera leur centrage. Dans le mode de réalisation décrit ici et qui constitue un mode préféré, l'angle $\alpha$ (Alpha) vaut environ 260°.

Les excentriques 315 et 316 sont montés en vis à vis de telle manière que la came centrale de l'excentrique 315 soit placée contre la came centrale de l'excentrique 316, leur apex respectif ayant la même position angulaire.

Bien que les excentriques 315, et 316 soient fixés et solidaires en rotation avec l'organe moteur 31, leur fonction est la mise en mouvement des satellites comme cela sera exposé plus loin. Ces deux excentriques 315 et 316 se trouvent d'une part centrée par leur alésage D31 ajusté sur l'arbre de la deuxième portion 312 de l'arbre moteur 31, mais aussi par leur diamètre extérieur D504 ajusté dans l'alésage du roulement à billes 521 commun, ce double centrage leur impose ainsi de rester bien en phase angulairement l'une par rapport à l'autre.

Ces excentriques peuvent être usinés à partir de barres en alliage d'aluminium pour de faibles quantités ou être injectées sous pression en alliage de zinc de type Zamak pour de plus grandes quantités permettant d'obtenir des pièces très fines et très précises à faible coût.

Le réducteur 5 est de type cycloïdal, c'est à dire qu'il comprend trois composants distincts mobiles en rotation relativement et coaxialement les uns par rapport aux autres, l'un des trois étant maintenu fixe. Celui des composants qui est connecté au moteur est appelé, « entrée » du réducteur, tandis l'autre des composants qui est en rotation coaxiale avec l'entrée est appelé « sortie » du réducteur. Dans le premier mode de réalisation de l'invention, l'entrée du réducteur 5 est constituée par l'organe moteur 31 qui, comme expliqué ci-dessus est solidaire du rotor 32. La sortie du réducteur 5 est quant à elle constituée par une couronne 55 et une bague d'entraînement 56 qui lui est lié solidairement. Entre la sortie et l'entrée du réducteur 5 se trouve le porte-satellite 57.

Le porte-satellite 57 est, pour ce premier mode de réalisation, fixe en rotation, il comprend principalement un flasque droit 573 fixé à la paroi centrale par l'intermédiaire de six vis 572 et six entretoises 571. Dans ce mode de réalisation, la paroi centrale 213 constitue le flasque gauche 574 du porte satellite. Un espace, ou cage, est ainsi délimité entre le flasque droit 573 et le flasque gauche 574 (c'est-à-dire la paroi centrale 213). C'est à l'intérieur de cet espace que prennent place les trois satellites 51, 52 et 53. La figure 5, qui est une coupe transversale selon le plan de coupe C-C permet de voir que les six vis 572 et les six entretoises 571 sont régulièrement réparties sur la circonférence.

Le premier et le troisième satellite 51, 53 appelés satellites latéraux, sont identiques et chacun constitués par un unique disque denté 50 visible en perspective à la figure 7. Le deuxième satellite 52, appelé satellite central, est constitué de deux disques dentés 50 identiques et juxtaposés.

Chaque disque denté 50 comprend un alésage central 504 de diamètre D504 et une denture externe 503 de diamètre primitif D50. Il comprend en outre une première série de six larges ouvertures 501, régulièrement réparties à la circonférence. Lorsque les disques 50 sont en place dans le porte-satellite, les larges ouvertures 501 sont traversées par les vis 572 et les entretoises 571.

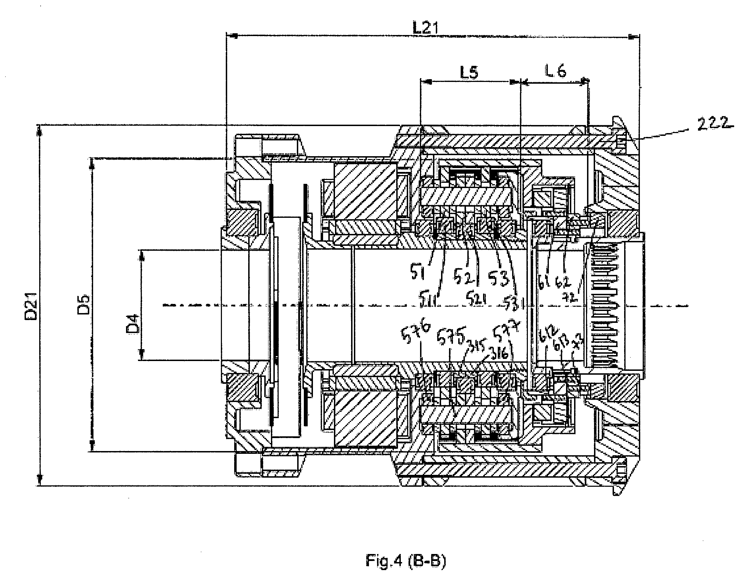

Les disques dentés comprennent également une deuxième série de six ouvertures circulaires 502, de diamètre D502 régulièrement réparties à la périphérie. Le rôle de ces ouvertures circulaires 502 est visible à la vue de la figure 4 qui est une coupe longitudinale dans le plan B-B et de la figure 6.

Chacune de ses ouvertures circulaires 502 est traversée par un des six petits arbres 575 qui sont montés entre le flasque droit 573 et le flasque gauche 574 à l'aide de petits roulements à billes 576 et 577. Ces petits arbres 575 ont un diamètre extérieur D575 sensiblement égal à D502 moins deux fois la valeur de l'excentricité « e » (D575 + 2e = D502). Bien que les petits arbres 575 soit de diamètre inférieur à celui des ouvertures circulaires 502, ils restent en contact les uns avec les autres à chaque instant. Ces petits arbres 575 étant très sollicités en flexion rotative, ils doivent être suffisamment résistant. Néanmoins, et pour limiter l'encombrement général du dispositif ainsi que le poids, on les choisi de diamètre d'environ 4 mm.

Les satellites sont montés sur les excentriques 315 et 316 de la façon suivante : le satellite latéral 51 est monté sur la came latérale 3101 de l'excentrique 315 grâce à un roulement à billes 511. De manière similaire, le satellite latéral 53 est monté sur la came latérale 3101 de l'excentrique 316 grâce à un roulement à billes 531. Le satellite central 52, qui, on le rappelle est deux fois plus épais que les satellites latéraux, car il comprend 2 disques 50 juxtaposés, alors que les satellites latéraux n'en comprennent qu'un seul, est monté sur les cames centrales juxtaposées de l'excentrique 315 et de l'excentrique 316 grâce à un roulement à billes 521. On notera que les rondelles 3103 des excentriques 315, 316 servent d'entretoises entre les bagues internes des roulements 511, 521 et 531.

Le montage des satellites 51, 52 et 53 leur impose un engrènement avec la denture interne 551 de la couronne 55, dont le diamètre primitif est D55. De plus, comme ils sont traversés par les petits arbres 575, lesquels ne tournent pas autour de l'axe X, et, de surcroit, en contact avec ces derniers, leur seul mouvement possible est un mouvement de translation circulaire d'axe X dont la trajectoire est un cercle de rayon égal à « e ». Le mouvement des satellites génère alors une rotation selon l'axe X de la couronne 55.

A la différence d'un train épicycloïdal classique, les trois satellites 51,52 et 53 ne sont pas répartis régulièrement sur la circonférence, c'est-à-dire séparés l'un de l'autre d'un écart angulaire de 120° par exemple. En effet, le montage de ces derniers sur les excentriques 315, 316 qui, on l'a vu plus haut, ont des cames dont l'apex est diamétralement opposé, fait que, à chaque instant, la position angulaire du point d'engrènement du satellite central 52 avec la couronne 55 est diamétralement opposée avec celle des points d'engrènement des satellites latéraux 51 et 53. Cette configuration a pour effet d'équilibrer tous les efforts et les moments autre que le couple de rotation autour de l'axe X auxquels les trois satellites soumettent la couronne 55 . Comme, d'autre part, la couronne 55 et la bague d'entraînement 56 qui lui est lié sont connectées à la roue-libre par l'intermédiaire d'un joint de Oldham (cf. ci-dessous), on peut dire que la couronne 55 est soumise à un moment pur d'axe X.

En pratique, la rotation du moteur à une vitesse angulaire positive $\omega 1$, entraîne la rotation de l'organe moteur 31 et des excentriques 315 et 316 à la même vitesse. Les excentriques génèrent le mouvement spécifique des satellites 51, 52 et 53, lesquels entraînent la couronne 55 dans une rotation positive de vitesse w2 largement inférieure à ω1.

Le rapport de réduction R est égale à (D55 - D50)/D55. Si on exprime le rapport de réduction R avec le nombre des dents Z55 de la couronne 55 et le nombre de dents Z50 des satellites 50, nous avons les formules suivantes :

[Math. 1]

$$R = \frac{D55 - D50}{D55} = \frac{Z55 - Z50}{Z55}$$

Avantageusement, on choisira un rapport de réduction compris entre 1/30 et 1/60. Au-dessus de 1/30, le moteur utilisé devra être susceptible de fournir un couple important, ce qui implique que son circuit magnétique devra être également important et par conséquent plutôt lourd. L'utilisation d'un rapport de réduction inférieur à 1/60, implique l'utilisation d'un moteur qui tourne très vite et dans lequel les pertes par courants de Foucauld sont importantes, ce qui en dégrade considérablement le rendement.

Dans le mode de réalisation décrit ici, nous avons R = 1/46 (Z55 = 138, Z50 = 135).

Sachant que l'excentration « e » est définie comme étant égale à (D55 - D50)/2, on peut déduire que : e = R x D55/2. Dans le mode de réalisation décrit, nous avons e = 0.7 mm.

Les dentures représentées sur ce premier mode de réalisation sont des dentures droites en développante de cercle ayant un module de denture égal à 14/30 (environ 0,467 mm) la couronne extérieure 55 ayant 138 dents a donc un diamètre primitif de 64,4 mm, les pignons satellites 51, 52 et 53 possèdent 135 dents et ont donc un diamètre primitif de 63 mm, comme ces 2 engrenages ont des diamètres primitifs très voisins, leur engrènement pose quelques problèmes de conception afin que leurs dents s'engrènent sans interférence, ainsi une définition de denture normalisée, accessible à l'homme de l'art, avec un angle de poussée à 20° et une saillie de dent égale au module et un creux de dent égal à 1,25 fois le module, soit une hauteur de dent de 2,25 fois le module, ne convient absolument pas pour ce type de réducteur de par les interférences de dentures bloquant l'engrènement à son entrée et à sa sortie, ce problème a été résolu dans notre cas en utilisant un petit module de 14/30 de mm, un angle de poussée égal (ou supérieur) à 31° et une saillie de dent égale (ou inférieure)à 0,9 fois le module avec un creux de dent égal à une fois le module, qui doit être nécessairement strictement supérieur à la saillie de l'autre pignon engrené,. Il faut noter qu'il est préférable de limiter l'angle de poussée, dans les limites de non-interférence, afin de minimiser les composantes radiales engendrées et maximiser ainsi le rendement du réducteur. L'augmentation de l'angle de poussée réduit l'angle de conduite théorique de la denture, mais l'étude de déformation de denture par éléments finis montre que de très nombreuses dents viennent malgré cela en contact pour transmettre l'effort de denture car le nombre de dents très voisins entre le pignon 51, 52 et 53 ayant cent trente-cinq dents et la couronne 55 ayant centre trente-huit dents conduisent à des profils très voisins s'engrenant sur un très grand nombre de dents et avec des contacts de faible courbure et de même signe donnant ainsi de très faibles pressions de contact, permettant ainsi de transmettre des couples élevés tout en ne générant que très peu de vibration et de bruit.

La problématique d'interférence de denture est liée à la hauteur de saillie de la dent ainsi qu'à l'angle de poussée, il est donc très favorable d'ajouter des dents en réduisant le module, le compromis trouvé ici n'a rien de trivial pour l'homme de l'art et doit être optimisé pour chaque ratio de réduction désiré, sachant que la problématique d'interférence est moins critique pour un ratio de 1/30 que pour un ratio de 1/45, avec un ratio de 1/30 on pourra diminuer l'angle de poussée et ou augmenter la saillie de la dent.

Les pignons satellites sont sollicités au niveau du contact de la denture mais également dans les ouvertures circulaires 502 dans lesquels roulent sans glisser les petits arbres 575, ce contact engendre une pression de contact relativement élevée et nécessite un niveau de dureté suffisant des petits arbres 575 mais également dans les ouvertures circulaires 502 des pignons satellites 51, 52 et 53 qui pourront être réalisés en acier prétraité ou trempé ou en acier cémenté ou avec une nitruration très favorable à ce type de contact.

Dans une autre variante les pignons peuvent être réalisés en thermoplastique en ajoutant un insert métallique à chaque ouverture circulaire afin de mieux supporter la pression des petits arbres.

Le motoréducteur présenté dans ce premier mode de réalisation permet de transmettre un couple d'assistance continu de 30 N.m à une vitesse de rotation de 100 tr/min ce qui correspond à une puissance continue d'environ 315 Watt, son encombrement est très limité puisque le carter externe fait une longueur totale de 90 mm et que son diamètre extérieur inséré dans le cadre mesure seulement 79 mm. La longueur L5 de son réducteur mesure 23,5 mm alors que la longueur totale L5+L6 incluant le réducteur et le mécanisme de roue-libre ne mesure que 36,7 mm. La masse du motoréducteur ne fait que 345 g alors que la masse du moteur pèse 260 g et que la masse totale du boîtier motoréducteur pèse moins de 950 g.

Avantageusement, dans ce mode de réalisation la disposition des deux disques externes qui se trouvent excentrés en opposition de phase relativement aux deux disques jumelés centraux, assure un équilibrage dynamique parfait ne générant ainsi aucune vibration ou bruit parasite.

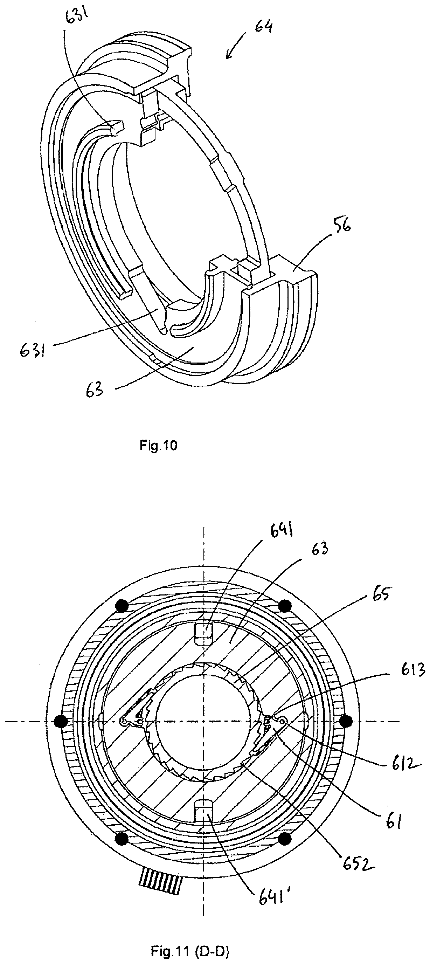

La sortie du réducteur est reliée à l'arbre 4 par l'intermédiaire de la roue-libre 6. Pour absorber de léger défaut de décentrage entre la rotation de la bague d'entraînement 56 et le corps de roue-libre 63, on place un joint de Oldham 64 entre ces deux éléments (cf. figures 9 et 10). Le joint de Oldham 64, se présente sous la forme d'une bague comportant sur une de ses faces deux protubérances droites 641, 641' diamétralement opposées l'une à l'autre, et sur son autre face deux autre protubérances gauche 642, 642', également diamétralement opposées l'une à l'autre. Le diamètre sur lequel se placent les protubérances droites et celui sur lequel se trouve les protubérances gauches sont perpendiculaires. Les protubérances droites 641, 641' sont reçues dans les logements droits 631, 631' ménagés dans le corps de roue-libre 63 ayant une forme complémentaire aux protubérances et les protubérances gauches 642, 642' sont reçues dans des logements gauches 562, 562' ménagés dans la bague d'entraînement 56.

Ce joint d'Oldham peut être réalisé dans un matériau ayant des propriétés amortissantes afin de filtrer les éventuels défauts d'engrènement des dentures ainsi que les éventuelles variations de couple engendrées par le moteur afin de limiter le bruit émis par le motoréducteur.

Dans ce premier mode de construction, la rotation du moteur est certes globalement coaxiale à l'arbre central du pédalier mais son montage de roulement ne prend nulle part référence à cet arbre central de pédalier, ainsi le centrage du rotor dans le stator qui doit être très précis de par le très faible jeu d'entrefer régnant entre le rotor et le stator s'en trouve très bien assuré et totalement indépendant des charges élevées pouvant solliciter et déformer l'arbre central., le joint d'Oldham a ici pour fonction d'associer les deux sans superposer de contraintes d'hyperstatisme.

La roue-libre 6 va maintenant être décrite en détail. Elle comprend de manière classique deux cliquets 61 et une bague de synchronisation 62. Les cliquets 61 sont montés pivotants autour de petits axes 612 à l'intérieur d'un logement 631 ménagé dans le corps de roue-libre 63. Les cliquets 61 pivotent entre une position « engagée » (non représentée), dans laquelle leur extrémité distale est en prise avec une des dents 652 ménagées sur le rochet 65, et une position « dégagée » représentée à la figure 11 (coupe D-D).

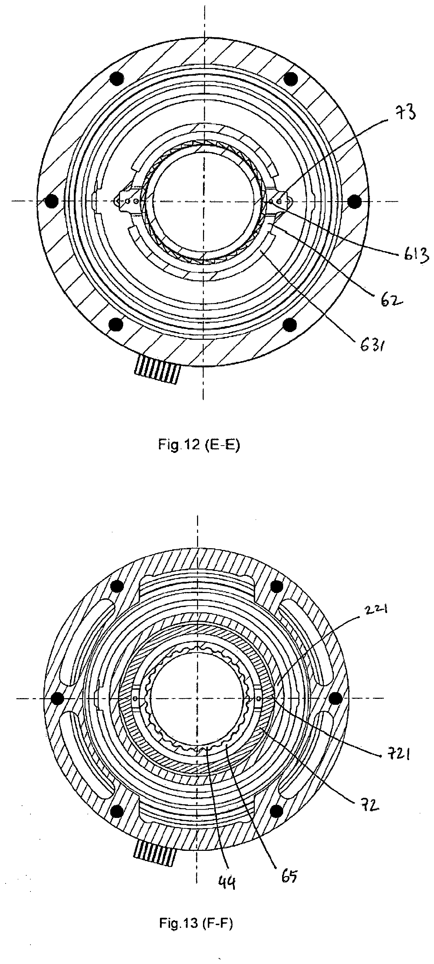

Une bague de synchronisation 62 (cf. figure 12) synchronise le mouvement de basculement des deux cliquets 61. Cette bague est reliée aux cliquets par deux goupilles 613. Elle est montée pivotante autour de l'axe X grâce à un rebord 631 qui la guide et maintien par clipsage contre le corps de roue libre 63. La bague de synchronisation 62 a une petite amplitude de rotation par rapport au corps de roue-libre 63. En effet, la bague de synchronisation est fixée aux cliquets à une distance de quelques millimètres de leur point de pivotement si bien que le pivotement des cliquets 61 autour des petits axes 612 entraîne un déplacement de quelques degrés des goupilles 613.

Les deux cliquets 61 sont opposés à 180° permettant d'équilibrer les efforts transmis en transmettant, en théorie, un couple pur sans composante radiale, et en divisant sensiblement par deux, l'effort transmis par chacun des cliquets. Les cliquets ont de préférence une extrémité avec un bec engageant avec des dents 652 ménagées sur le rochet 65. Ainsi, dès que l'extrémité du cliquet vient au contact du rochet 65, le cliquet va alors continuer sa course pour s'engager automatiquement en fond de dent malgré les frottements s'opposant à son engagement, leur permettant de rester parfaitement stables une fois engagés, la bague de synchronisation 62 montée en pivot sur la sortie du réducteur permet de synchroniser la rotation de celle-ci afin qu'ils s'engagent bien simultanément.

La roue-libre comprend également des moyens qui permettent de piloter les cliquets 61, et notamment de les maintenir en position dégagée. Ces moyens comprennent une bague de friction 72 et deux goupilles 73. La figure 13 montre la géométrie et le fonctionnement de la bague de friction 72. La bague de friction est un anneau élastiquement déformable qui vient en appui précontraint sur une partie fixe du dispositif sur au moins deux zones. Dans le mode de réalisation représenté, la partie fixe est un fût cylindrique 221, faisant saillie depuis la face intérieure du couvercle 22. Cette bague comporte deux bourrelets 721 diamétralement opposés ménagés sur la face intérieure de la bague. Ces bourrelets sont prévus pour venir glisser sur la surface intérieure du fût 221 issu du couvercle 22. La bague de friction 72 est solidaire en rotation de la bague de synchronisation 62 par l'intermédiaire de deux goupilles 73 s'insérant dans deux trous radialement oblongs diamétralement opposés. Pour assurer un certain serrage de la bague de friction sur le fût 221, le diamètre extérieur entre les deux bourrelets est, à l'état libre, légèrement supérieur d'environ 0,5 mm au diamètre extérieur du fût 221. La mise en place de la bague de friction générera une certaine ovalisation de cette dernière, la géométrie de cette bague de friction doit être dimensionnée pour générer deux efforts radiaux diamétralement opposés lors de son ovalisation de 0,5 mm sans engendrer de contraintes élevées sur cette dernière afin qu'elle puisse supporter ce niveau de contrainte sans fluage durant toute la durée de vie du produit. On pourra choisir un matériau de type PBT ou POM pour réaliser la bague car cette pièce de frottement doit avoir une très bonne résistance à l'usure, et une très bonne élasticité ainsi qu'un bon comportement à la température de fonctionnement pour garantir une très bonne stabilité de sa précontrainte de serrage sur toute la durée de vie d'utilisation du produit.

Le serrage diamétral de cette bague de friction 72 sur le fût 221 va induire un couple de frottement stable et maîtrisé s'opposant à la rotation de cette dernière par rapport au fût 221 lui-même lié au boîtier du cadre 1.

A titre d'exemple, on obtient un très bon fonctionnement en dimensionnant la bague de friction pour obtenir deux efforts radiaux diamétralement opposés au niveau des bourrelets de friction d'environ 5N sous un serrage diamétral de 0,5 mm avec un niveau de contrainte de moins de 10 MPa sur cette dernière, évitant ainsi tout risque de relaxation ou fluage dans le temps, ces efforts radiaux générés sur le fût de diamètre 35 mm permettent de générer un couple de frottement d'environ 25 mN.m dans les deux sens de rotation, largement suffisant pour engager et désengager les cliquets, tout en générant un couple suffisamment faible pour ne pas induire de perte de puissance significative lors du glissement de cette dernière, puisque ce couple de frottement de 25 mN.m ne génère une perte que de 0,2 Watt à 80 tour par minute, ce qui est négligeable devant la puissance d'assistance et qui ne permet pas d'échauffer et d'user la zone des bourrelets en contact avec le fût 221.

La transmission de couple entre le rochet 65 et l'arbre 4 passe par la bague de transmission de couple 44. Il s'agit de la deuxième liaison mécanique de la bague de transmission de couple 44. Dans le premier mode de réalisation de l'invention, cette liaison mécanique est facilement désolidarisable. La bague 44 comporte une portion cannelée 441 et une portion tronconique 442, cette portion tronconique d'angle d'environ 15° est suffisamment ouvert pour être réversible et être aisément démontable sans avoir besoin d'un extracteur, mais pas trop ouvert non plus pour assurer un très bon centrage radial de l'arbre du pédalier sous l'effort axial modéré de la vis 46 qui a permis de précharger le montage avant le blocage des deux vis 162. Lorsque le pédalier est en place, la bague 44 se trouve à l'intérieur du rochet 65, avec sa portion cannelée 441 qui est en regard avec les cannelures internes 654 du rochet 65. La bague de transmission de couple 44 se trouve alors sous le roulement à bille 224.

Le fonctionnement du dispositif d'assistance va maintenant être décrit en détail.

Dans une première phase, le cycliste souhaite être assisté avec le moteur électrique. Il a mis en marche le dispositif d'assistance et éventuellement choisi le niveau d'assistance. Le rotor du moteur va commencer à tourner dans le sens positif. La sortie du réducteur va alors entraîner dans le sens positif (sens normal de pédalage repéré avec un signe + sur les figures) à une vitesse 46 fois plus réduite que le moteur, la bague de synchronisation 62 qui va également entraîner en rotation dans le même sens avec elle la bague de friction 72, le frottement de ses deux bourrelets 721 sur le fût du couvercle 22 va générer un couple de frottement qui va être transmis à la bague de synchronisation 62. Comme cette dernière a une faible amplitude de rotation relative par rapport à la bague d'entraînement 56, le couple de frottement aura pour effet de la forcer dans le sens opposé au déplacement et donc à la faire tourner en arrière relativement à la sortie du réducteur. Cette rotation relative tend à faire pivoter les cliquets dans leur sens d'engagement provoquant la connexion en rotation du moteur avec l'arbre d'entraînement 4. La roue libre est alors engageante et l'accouplement en rotation va être très vite assurée après la petite phase transitoire d'accostage que nous venons de décrire, pour assurer un accostage en douceur et sans bruit, il est préférable de limiter le courant moteur durant un court moment à chaque reprise d'assistance afin d'assurer un accostage en douceur et sans bruit, pour améliorer cette phase d'accostage il est également préférable de réduire le pas angulaire des dents 652 du rochet 65, comme on peut le constater sur la coupe de la figure 6, il est tout à fait possible d'intégrer 32 dents 652 sur le rochet 65 ce qui permet d'assurer un pas d'engagement limité (11, 25°) et donc un accostage souple et rapide. Une fois accouplé, les deux cliquets sont bien engagés de manière stable en fond de dents, cela correspond à l'état 1 de la roue libre 6, dit état d'assistance, ou encore au mode de pédalage avec assistance (phase 2) lorsque le cycliste ne pédale pas plus vite que l'assistance fournie par le moteur.

Dans le cas où le cycliste augmente sa fréquence de pédalage jusqu'à dépasser la vitesse de sortie de réducteur (phase 3), les dents 652 du rochet 65 vont lever les cliquets 61 à chaque passage de dents et aucun couple ne sera transmis entre la bague d'entraînement et l'arbre 4. La roue libre est alors glissante. Il s'agit là du fonctionnement classique d'une roue libre. Cela correspond à l'état 2, dite état de roue-libre, de la roue libre 6. Nous pouvons noter que lorsque le cliquet va être levé par une dent 652 du rochet 65, la bague de synchronisation 62 et la bague de friction 72 vont alors prendre un peu d'avance relativement à la bague d'entraînement mais le couple de frottement de la bague de friction provoqué par le frottement des bourrelets 721 sur le couvercle 22 restera sensiblement constant provoquant le ré-engagement immédiat des cliquets dès que la dent 652 sera passée, ainsi dans cette phase de roue-libre, la bague de frottement agit de manière analogue aux ressorts de rappel des roues libres à cliquets conventionnels.

Maintenant, si le cycliste décide de rétropédaler (phase 5), l'arbre 4 qui tourne dans le sens négatif va entraîner, par l'intermédiaire des cliquets, la bague d'entraînement 56 et la bague de friction 72. Le frottement des bourrelets 721 avec le couvercle 221 génère un couple de frottement qui s'oppose à la rotation et fait tourner la bague de synchronisation relativement à la bague d'entraînement jusqu'à ce que les deux cliquets se lèvent rendant impossible l'accouplement moteur. La roue-libre est alors à l'état 3, dit état de déconnexion, comme représenté à la figure 10.

En fait, ce débrayage des cliquets est lié au sens de rotation relatif entre la couronne du réducteur et le couvercle du boîtier de pédalier (fixe), ainsi on pourra contrôler l'engagement des cliquets en pilotant le sens de rotation du moteur de sorte qu'il suffise d'ordonner une petite rotation arrière du moteur pour faire pivoter la bague d'entraînement 56 d'au moins quelques degrés vers l'arrière, c'est-à-dire dans le sens négatif, pour débrayer la roue libre.

Dans la pratique, si le cycliste est en marche avant avec une assistance du moteur (phase 2), les cliquets sont alors engagés. A partir de cet état, si le cycliste décide de faire brutalement marche arrière (phase 5), ou d'arrêter de pédaler pour pouvoir stopper (phase 4), comme les cliquets ont des becs engageants, il peut être possible que les cliquets ne puissent pas se dégager facilement malgré le couple de frottement appliqué sur la bague de synchronisation, pour cela il est souhaitable qu'un microcontrôleur de commande (non représenté) puisse détecter cet événement soit par un capteur de couple de pédalage (non représenté) qui devient subitement nul ou négatif, soit par une vitesse de rotation du pédalier nulle détectée par un capteur angulaire (non-représenté), soit par une forte décélération angulaire ou encore par une inversion du sens de rotation du moteur ou du pédalier et ordonner alors une rotation arrière du moteur avec une accélération arrière plus importante que celle du cycliste pendant une fraction de tour ce qui va désengager les cliquets et permettent leur soulèvement, cette marche arrière pourra être stoppée quasi immédiatement et la roue-libre restera alors dans cet état stable désengagé sans induire le moindre frottement ou le moindre bruit supplémentaire pour le cycliste.

Enfin, lorsque le cycliste décide de se passer d'assistance ou que la batterie est épuisée (phase 1), le microcontrôleur ordonnera une rotation en marche arrière du moteur afin de placer la roue libre en l'état désengagé. Ainsi la présence du dispositif d'assistance n'induit aucun frottement ou bruit supplémentaire.

Le dispositif d'assistance selon l'invention se caractérise notamment par le fait que le ou les plateaux dentés 181, 182 qui servent à la transmission du couple depuis les pédales jusqu'à la roue arrière du vélo sont solidaires en rotation avec l'arbre de pédalier 4, c'est-à-dire l'axe qui porte les manivelles droite 16 et gauche 16'. Cette configuration qui est la configuration habituelle d'un vélo sans assistance électrique n'est quasiment jamais présente dans les vélos à assistance électrique dont le moteur d'assistance est placé au niveau du pédalier du vélo. Pour garantir le bon fonctionnement du dispositif d'assistance selon l'invention, on s'assure que le moteur électrique transmet le couple d'assistance à l'arbre du pédalier. Bien entendu, cette transmission de couple se fait via une roue libre qui est placée, fonctionnellement, entre la sortie du moteur et l'arbre 4. La transmission de couple du moteur vers l'arbre de pédalier 4 utilise une bague de transmission 44 qui est au moins partiellement placée sous l'un des roulements servant au montage de l'arbre de pédalier.

Avantageusement, dans le dispositif d'assistance selon l'invention, il est facile de démonter le pédalier sans avoir à démonter l'ensemble du dispositif d'assistance. En effet, dans le cas précis du premier mode de réalisation, il suffit de dévisser l'écrou 46, puis les vis 162 pour pouvoir retirer la manivelle gauche 16'. Quelques coups de maillet sur l'extrémité de l'arbre 4 permettent l'extraction du sous-ensemble composé de l'arbre 4, du plateau 161, 18 et de la manivelle droite 16. Ainsi, la première liaison mécanique de la bague de transmission 44 est désolidarisée du rochet 65. Le sous-ensemble extrait se trouve dans la configuration représentée à la figure 2, c'est-à-dire avec la bague 44.

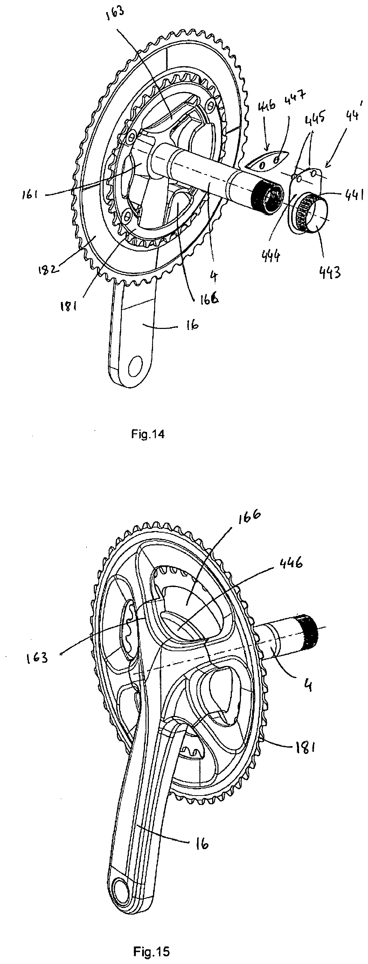

Les figures 14 et 15 décrivent une variante du premier mode de réalisation de l'invention.

Plutôt que d'avoir à coller la bague de transmission de couple 44', appelée également dans ce mode de réalisation cannelée 44', sur l'arbre 4, celle-ci est simplement montée en pivot sur l'arbre, avec un jeu très réduit, la transmission de couple se faisant grâce à un toc comme nous allons le voir ci-dessous.

La bague cannelée 44' comprend une portion cylindrique 443, à la surface extérieure de laquelle sont ménagées des cannelures 441 prévues pour coopérer avec les cannelures 654 complémentaires ménagées à l'intérieur du rochet 65 de la roue libre (cf. figure. 3). Lorsque le pédalier est monté, la bague 44' se trouve sous le roulement à bille 224.

La bague cannelée 44' comprend également un bras radial 444. Parfaitement solidaire de la portion cylindrique 444. De préférence, pour réduire l'encombrement axial, le bras 444 se présente sous la forme d'une plaque. Il peut être fixé à la plaque par tout moyen adéquat, par exemple par soudure ou sertissage. On peut également envisager de réaliser la bague cannelée 44' en une seule pièce par usinage.

A l'extrémité distale du bras radial, des moyens de blocage de la rotation de la bague 44' par rapport à la manivelle droite 16 sont prévus. Ces moyens comprennent notamment deux ergots 445 qui font saillie depuis la face externe de celui-ci et un insert 446. Les ergots 445, sont aptes à être insérés à l'intérieur de deux orifices 447, ayant une forme complémentaire à celle des ergots et qui sont ménagés dans l'insert 446 indépendant.

L'insert 446, à une forme extérieure spécifique au pédalier que l'on souhaite monter dans le dispositif d'assistance selon l'invention. Dans le mode de réalisation décrit ici, la manivelle droite 16 constitue avec une étoile de plateau 161, sur laquelle les plateaux 181, 182 sont vissés, qu'un seul et même élément monobloc. Entre les branches 163 de l'étoile de plateau 161, des creux 166 sont définis.

La figure 15 montre comment l'insert 446 est susceptible de venir se caler et s'immobiliser dans le fond du creux 166. Ainsi, lorsque la bague cannelée 44' est en place sur l'arbre 4, que l'insert 446 est fiché sur les ergots 445 et calé dans le creux 166, il suffit d'insérer le pédalier dans le dispositif d'assistance pour le couple d'assistance puisse être transmis aux plateaux du pédalier.

Bien entendu, l'insert pourra prendre au tant de formes extérieures que nécessaire pour s'adapter à de multiples pédaliers. Il s'agit bien là d'un des avantages importants de l'invention ; la possibilité d'installer n'importe quel pédalier standard dans le dispositif d'assistance de l'invention.

D'autre part, pour un pédalier standard dans lequel manivelle droite et étoile de plateau sont obtenu par forgeage, il est possible de prévoir un insert d'une forme telle qu'il puisse se caler dans une des cavités 166 seulement visible sur la face interne, normalement cachée, de l'étoile 161.

Dans cette variante, les deux liaisons mécaniques assurées par la bague 44' sont aisément désolidarisable, celle qui la relie au rochet 65 par les cannelures et celle qui la relie à l'étoile 161 de la manivelle droite 16.

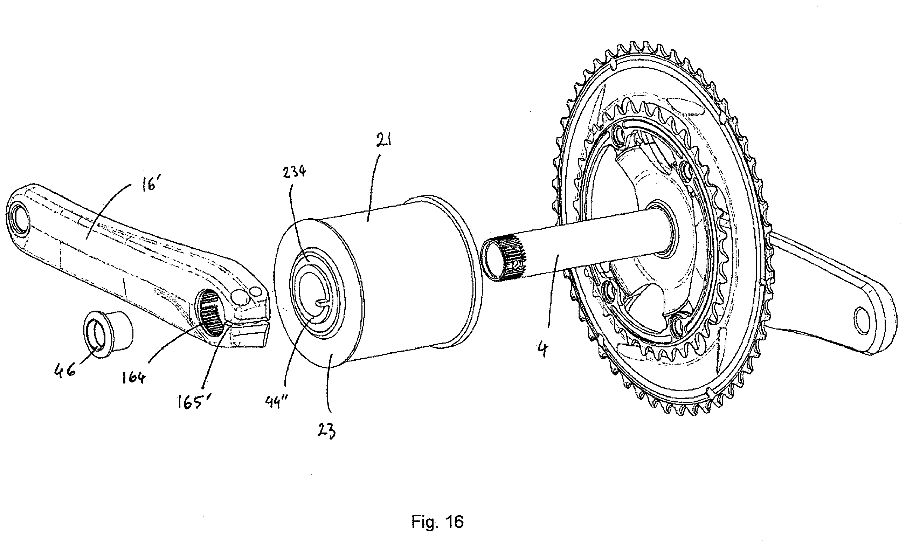

La figure 16 montre en perspective le dispositif selon un deuxième mode de réalisation de l'invention. Le dispositif d'assistance comprend un carter 21, et un pédalier. Ce dispositif est prévu pour être logé dans le boîtier de pédalier d'un vélo. La figure 15 montre le dispositif avant assemblage du pédalier avec le reste du dispositif.

Le carter 21 est fermé d'un côté par le couvercle gauche 23 et de l'autre par le couvercle droit 22. Dans ce troisième mode de réalisation, la bague 44" qui assure la transmission du couple d'assistance du moteur vers l'arbre 4, n'est plus placée du côté de la manivelle droite 16, mais du côté de la manivelle gauche 16'. Cette bague est visible à l'extérieur du carter 21 car elle se trouve placée sous le roulement à billes 234 ménagée dans le couvercle gauche 23.

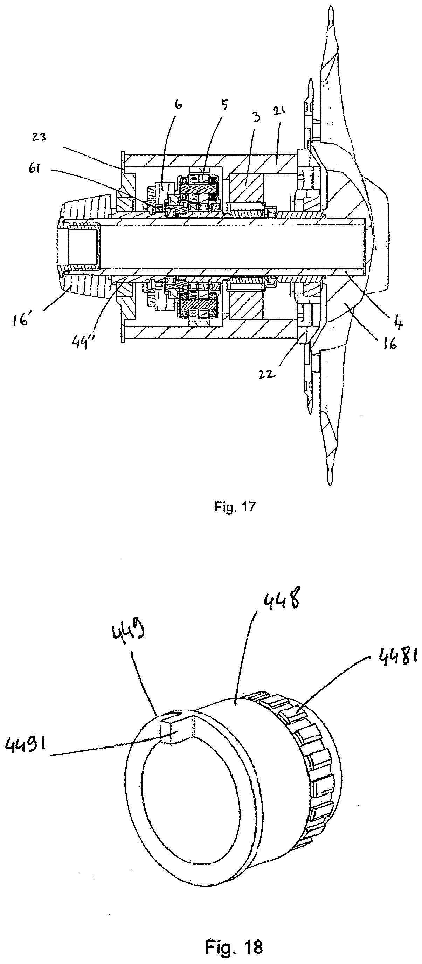

La figure 17 montre en coupe longitudinale l'ensemble du dispositif. De manière similaire à ce qui a été décrit pour le premier mode de réalisation de l'invention, le dispositif comprend un moteur 3, un réducteur 5, une roue libre 6 et des moyens de mesure 9.

Des moyens de mesure 9 comprennent notamment, des moyens ménagés sur le couvercle droit 22 et qui permettent de mesurer les efforts auxquels sont soumis le pédalier. Ces moyens de mesure sont placés de telle manière qu'il soit possible de la puissance mécanique générée par le cycliste et le moteur.

Le moteur 3 et une voie de transmission de puissance mécanique sont logés à l'intérieur du carter 21. La voie de transmission de puissance mécanique comprend un réducteur mécanique 5 et une roue libre 6 débrayable. En bout de chaîne de la voie de transmission de puissance se trouve la bague de transmission de couple 44". Cette dernière comporte deux portions.

La figure 18 montre en perspective la bague de transmission de couple 44". La première portion 448 de la bague de transmission de couple, comporte à sa périphérie une denture dont chacune des dents 4481 est susceptible de venir au contact avec les cliquets de la roue libre, assurant ainsi une première liaison mécanique avec l'une des pièces de la roue-libre 6. Dans ce cas, la première liaison mécanique en question est la mise en butée des cliquets de roue-libre 61 contre les dents 4481. Cette première portion de la bague 44" joue le rôle du rochet de la roue-libre 6. Dans ce mode de réalisation de l'invention, la première liaison mécanique de la bague 44", n'est pas aisément désolidarisable. En effet, cela revient à démonter la roue-libre.

La deuxième portion 449 de la bague de transmission de couple 44" comporte des moyens de blocage de la rotation de la bague 44" par rapport à la manivelle gauche 16'. Ces moyens consistent en une clavette 4491 faisant saillie suivant la direction de l'axe X depuis la surface frontale de la bague 44". Lorsque le dispositif d'assistance est entièrement assemblé et que le pédalier est en place, cette clavette 4491, vient se loger dans la fente de serrage 165' de la manivelle gauche 16', assurant ainsi une deuxième liaison mécanique de la bague de transmission 44" avec la manivelle gauche 16'. Du fait de la présence des cannelures 164' de la manivelle 16' et des cannelures correspondantes sur l'arbre 4, la bague de transmission 44 réalise la liaison mécanique et la transmission de couple entre le moteur 3 et l'arbre 4. Cette deuxième liaison mécanique est facilement désolidarisable. En effet, cela se produit dès que l'on démonte la manivelle gauche 16'.

Conformément à l'invention, la bague de transmission 44" se trouve sous le roulement à billes principal gauche 234 du boîtier de pédalier, c'est-à-dire sous le couvercle gauche 23. Ainsi, la fonction de transmission de puissance entre le moteur et l'arbre peut être « sortie » du carter 21. Dans le cas c'est effectivement ce qui se passe dans la mesure où la clavette 4491 qui permet de solidariser en rotation le moteur 3 et l'arbre 4 est extérieur au carter 31, puisque placée au contact de la manivelle gauche 16'.

Avantageusement, dans le dispositif d'assistance selon l'invention, il est facile de démonter le pédalier sans avoir à démonter l'ensemble du dispositif d'assistance. En effet, dans le cas précis du deuxième mode de réalisation, il suffit de dévisser l'écrou 46, puis les vis 162 pour pouvoir retirer la manivelle gauche 16'. Ainsi, la deuxième liaison mécanique de la bague de transmission 44 est désolidarisée de la manivelle gauche 16'. Quelques coups de maillet sur l'extrémité de l'arbre 4 permettent l'extraction du sous-ensemble composé de l'arbre 4, du plateau 161, 18 et de la manivelle droite 16. Le sous-ensemble extrait se trouve dans la configuration représentée à la figure 16.

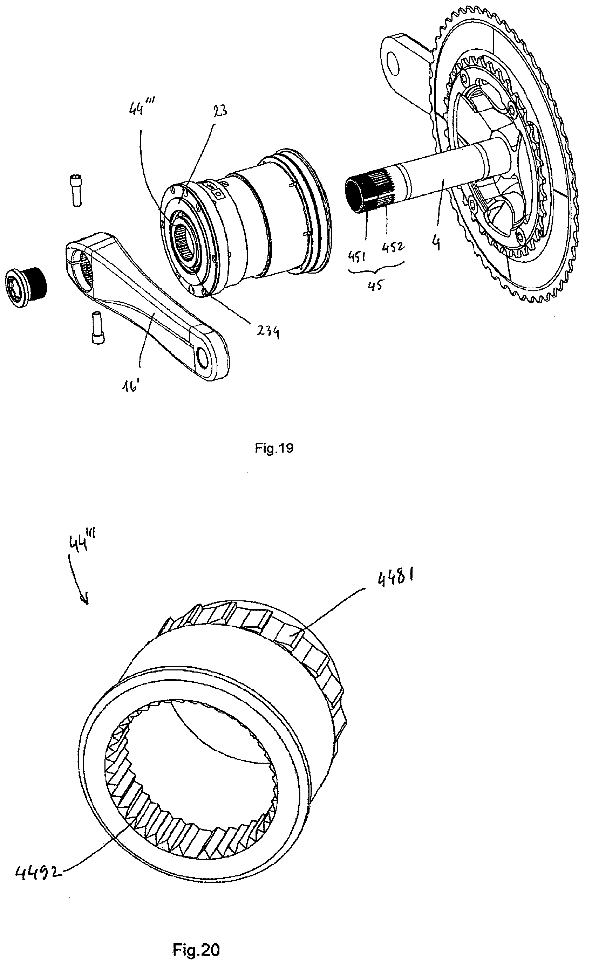

Les figures 19 et 20 décrivent une variante du deuxième mode de réalisation de l'invention. Cette variante nécessite un pédalier spécifique en ce qu'il impose une certaine longueur pour les cannelures 45 qui sont généralement ménagées à l'extrémité de l'arbre 4 pour la transmission de couple entre la manivelle gauche 16' et l'arbre 4.

Les cannelures 45 comportent deux portions adjacentes. La première portion 451 est celle utilisée pour permettre la transmission de couple entre la manivelle gauche 16' et l'arbre 4. La deuxième portion 452 est utilisée comme moyen de blocage de rotation entre la bague de transmission 44''' et l'arbre 4. De préférence, les cannelures de la première portion et celles de la deuxième portion sont identiques et sont en fait qu'une seule et même zone cannelée, mais plus longue que celle qu'on trouve habituellement à l'extrémité des arbres de pédalier standard. En effet, la longueur de la zone cannelée doit être telle que lorsque l'arbre est en place, la deuxième portion 452 se trouve sous le roulement à bille de gauche 234, lequel est placé au niveau du couvercle de gauche 23.

La bague de transmission de couple 44''' réalise une première liaison mécanique avec l'une de pièce de la roue libre, à savoir les cliquets 61. Cette liaison mécanique se fait grâce aux dents 4481 ménagées à la périphérie de la bague 44'''. En fait, la bague 44''' joue de rôle du rochet de roue libre. La deuxième liaison mécanique réalisée par la bague 44''' se fait grâce à des cannelures internes 4492 ménagées à l'intérieur de celle-ci. Les cannelures internes 4492 coopèrent avec la deuxième portion de cannelure 452.

L'invention ne se limite pas aux quelques modes de réalisation et variantes décrits ici à titre d'exemple. En effet, d'autres réalisations sont envisageables sans sortir du cadre de l'invention, défini par les revendications adjointes. Par exemple, seules des roue-libres à cliquets ont été décrites bien qu'il soit possible de les remplacer par d'autres types de roue-libre comme les roue-libre à friction.

**Revendications**

1. Dispositif d'assistance pour un vélo comportant un moteur (3), un réducteur (5), une roue libre (6) et un arbre (4) solidaire en rotation avec une manivelle droite (16) et une manivelle gauche (16') ; ledit moteur (3) transmettant un couple d'assistance à l'arbre (4) par l'intermédiaire de la roue-libre (6) ; ledit dispositif étant prévu pour être logé à l'intérieur d'un boîtier de pédalier (2) ; ledit arbre étant monté rotatif relativement audit boîtier grâce à deux roulements à billes (224, 234) ; ladite roue-libre (6) étant constituée de plusieurs pièces (63, 61, 65) placées entre le moteur (3) et l'arbre (4) ; le dispositif comprenant en outre une bague de transmission de couple (44, 44', 44",44''') permettant de solidariser l'une des pièces de la roue libre (61, 65) à l'arbre (4) ou à l'une des manivelle (16, 16') **caractérisé en ce que** ladite bague de transmission (44, 44', 44",44''') est au moins partiellement placée sous l'un des deux roulements à billes (224, 234).

2. Dispositif selon la revendication 1, **caractérisé en ce que** la bague de transmission de couple (44, 44', 44", 44''') réalise une première liaison mécanique avec l'une des pièces de la roue-libre et une deuxième liaison mécanique avec l'arbre (4) ou avec l'une des manivelles (16, 16'); et **en ce qu'**au moins une des deux liaisons mécaniques est désolidarisable de façon à retirer l'arbre (4).

3. Dispositif selon l'une des revendications précédentes, **caractérisé en ce que** la bague de transmission (44, 44') est placée à proximité de la manivelle droite (16) et la liaison mécanique désolidarisable est celle qui se trouve entre la bague et l'une des pièces de la roue libre.

4. Dispositif selon la revendication précédente, **caractérisé en ce que** la roue libre comprend au moins un cliquet (61) susceptible devenir en butée sur les dents (652) d'un rochet (65) et **en ce que** le rochet (65) est solidarisable avec la bague de transmission (44) par l'intermédiaire de cannelures (654, 441).

5. Dispositif selon la revendication précédente, **caractérisé en ce que** la bague de transmission comprend une portion cannelée (441) et une portion de forme tronconique (442).

6. Dispositif selon la revendication précédente, **caractérisé en ce que** la bague de transmission (44) est fixée à l'arbre (4) par collage, frettage ou par vis de pression radiale.

7. Dispositif selon la revendication précédente, **caractérisé en ce que** la bague de transmission (44') comprend une portion cylindrique (443) prévue pour entourer l'arbre (4) et un bras radial (444) s'étendant depuis la portion cylindrique (443), ledit bras radial (444) comportant des moyens de blocage avec la manivelle droite (16).

8. Dispositif selon l'une des revendications 1 à 2, **caractérisé en ce que** la bague de transmission (44", 44''') est placée à proximité de la manivelle gauche (16') et la liaison mécanique désolidarisable est celle qui se trouve entre la bague (44", 44''') et l'arbre (4) ou la manivelle gauche (16').

9. Dispositif selon la revendication précédente, **caractérisé en ce que** la bague de transmission (44", 44''') comprend une première portion (448) comportant une denture dont chacune des dents (4481) est susceptible de venir au contact d'un cliquet (61) de la roue-libre (60) et une deuxième portion (449) comportant des moyens de blocage de la rotation avec la manivelle gauche (16') ou avec l'arbre (4).

10. Dispositif selon la revendication précédente, **caractérisé en ce que** les moyens de blocage de la rotation comprennent une clavette (4491).

11. Dispositif selon la revendication 9, **caractérisé en ce que** les moyens de blocage de la rotation comprennent des cannelures internes (4492) aptes à coopérer avec des cannelures externes (452) ménagée sur l'arbre (4).

12. Dispositif selon l'une des revendications précédentes, **caractérisé en ce que** l'arbre (4) et la manivelle droite (16) constituent un sous-ensemble indépendant pouvant être désassembler du dispositif sans qu'il soit nécessaire de retirer les roulements à billes (224, 234) du dispositif.

**13.** Dispositif selon l'une des revendications précédentes, **caractérisé en ce que** l'arbre (4) a un diamètre D4 sensiblement constant sur toute sa longueur et **en ce que** ce diamètre est inférieur ou égal au diamètre intérieur D224 du roulement à bille (224) placé à proximité de la manivelle droite (16).

**Patentansprüche**

**1.** Unterstützungsvorrichtung für ein Fahrrad mit einem Motor (3), einem Getriebe (5), einem Freilauf (6) und einer Welle (4), die drehfest mit einer rechten Kurbel (16) und einer linken Kurbel (16') verbunden ist; wobei der Motor (3) über den Freilauf (6) ein Unterstützungsdrehmoment auf die Welle (4) überträgt; wobei die Vorrichtung dazu vorgesehen ist, im Inneren eines Tretlagergehäuses (2) untergebracht zu sein; wobei die Welle durch zwei Kugellager (224, 234) relativ zum Gehäuse drehbar gelagert ist; wobei der Freilauf (6) aus mehreren Teilen (63, 61, 65) ausgebildet ist, die zwischen dem Motor (3) und der Welle (4) angeordnet sind; wobei die Vorrichtung ferner einen Drehmomentübertragungsring (44, 44', 44", 44‴) umfasst, der es ermöglicht, eines der Teile des Freilaufs (61, 65) mit der Welle (4) oder mit einer der Kurbel (16, 16') zu verbinden, **dadurch gekennzeichnet, dass** der Übertragungsring (44, 44', 44", 44‴) zumindest teilweise unter einem der beiden Kugellager (224, 234) angeordnet ist.

**2.** Vorrichtung nach Anspruch 1, **dadurch gekennzeichnet, dass** der Drehmomentübertragungsring (44, 44', 44", 44‴) eine erste mechanische Verbindung mit einem der Teile des Freilaufs und eine zweite mechanische Verbindung mit der Welle (4) oder mit einer der Kurbeln (16, 16') herstellt und dass mindestens eine der beiden mechanischen Verbindungen lösbar ist, sodass die Welle (4) entfernt werden kann.

**3.** Vorrichtung nach einem der vorangehenden Ansprüche, **dadurch gekennzeichnet, dass** der Übertragungsring (44, 44') in der Nähe der rechten Kurbel (16) angeordnet ist und die lösbare mechanische Verbindung diejenige ist, die sich zwischen dem Ring und einem der Teile des Freilaufs befindet.

**4.** Vorrichtung nach dem vorangehenden Anspruch, **dadurch gekennzeichnet, dass** der Freilauf mindestens eine Sperrklinke (61) umfasst, die an den Zähnen (652) eines Sperrrads (65) zum Anschlag kommen kann, und dass das Sperrrad (65) über Rillen (654, 441) fest mit dem Übertragungsring (44) verbunden sein kann.

**5.** Vorrichtung nach dem vorangehenden Anspruch, **dadurch gekennzeichnet, dass** der Übertragungsring einen geriffelten Abschnitt (441) und einen kegelstumpfförmigen Abschnitt (442) umfasst.

**6.** Vorrichtung nach dem vorangehenden Anspruch, **dadurch gekennzeichnet, dass** der Übertragungsring (44) durch Kleben, Schrumpfen oder eine radiale Druckschraube an der Welle (4) befestigt ist.

**7.** Vorrichtung nach dem vorangehenden Anspruch, **dadurch gekennzeichnet, dass** der Übertragungsring (44') einen zylindrischen Abschnitt (443), der dazu vorgesehen ist, die Welle (4) zu umgeben, und einen radialen Arm (444), der sich vom zylindrischen Abschnitt (443) erstreckt, umfasst, wobei der radiale Arm (444) Mittel zum Blockieren mit der rechten Kurbel (16) aufweist.

**8.** Vorrichtung nach einem der Ansprüche 1 bis 2, **dadurch gekennzeichnet, dass** der Übertragungsring (44", 44‴) in der Nähe der linken Kurbel (16') angeordnet ist und die lösbare mechanische Verbindung diejenige ist, die sich zwischen dem Ring (44", 44‴) und der Welle (4) oder der linken Kurbel (16') befindet.

**9.** Vorrichtung nach dem vorangehenden Anspruch, **dadurch gekennzeichnet, dass** der Übertragungsring (44", 44‴) einen ersten Abschnitt (448) mit einer Verzahnung, bei der jeder Zahn (4481) mit einer Sperrklinke (61) des Freilaufs (60) in Kontakt kommen kann, und einen zweiten Abschnitt (449) mit Mitteln zum Blockieren der Drehung mit der linken Kurbel (16') oder mit der Welle (4) umfasst.

**10.** Vorrichtung nach dem vorangehenden Anspruch, **dadurch gekennzeichnet, dass** die Mittel zum Blockieren der Drehung eine Passfeder (4491) umfassen.

**11.** Vorrichtung nach Anspruch 9, **dadurch gekennzeichnet, dass** die Mittel zum Blockieren der Drehung innere Rillen (4492) umfassen, die mit an der Welle (4) vorgesehenen äußeren Rillen (452) zusammenwirken können.

**12.** Vorrichtung nach einem der vorangehenden Ansprüche, **dadurch gekennzeichnet, dass** die Welle (4) und die rechte Kurbel (16) eine unabhängige Unterbaugruppe bilden, die von der Vorrichtung demontiert werden kann, ohne dass die Kugellager (224, 234) von der Vorrichtung entfernt werden müssen.

13. Vorrichtung nach einem der vorangehenden Ansprüche, **dadurch gekennzeichnet, dass** die Welle (4) einen Durchmesser D4 aufweist, der über ihre gesamte Länge im Wesentlichen konstant ist, und dass dieser Durchmesser kleiner als oder so groß wie der Innendurchmesser D224 des in der Nähe der rechten Kurbel (16) angeordneten Kugellagers (224) ist.

**Claims**

1. Assistance device for a bike comprising a motor (3), a reduction gear (5), a freewheel (6) and a shaft (4) rotating solidly with a right crank (16) and a left crank (16'); said motor (3) transmitting an assistance torque to the shaft (4) via the freewheel (6); said device being intended to be housed inside a bottom bracket shell (2); said shaft being mounted with the ability to rotate relative to said shell by virtue of two ball bearings (224, 234); said freewheel (6) being made up of several components (63, 61, 65) which are placed between the motor (3) and the shaft (4); the device further comprising a torque transmission ring (44, 44', 44",44''') enabling one of the components of the free wheel (61, 65) to be secured to the shaft (4) or to one of the cranks (16, 16'), **characterized in that** said transmission ring (44, 44', 44", 44''') is at least partially placed under one of the two ball bearings (224, 234) .

2. Device according to Claim 1, **characterized in that** the torque transmission ring (44, 44', 44", 44''') creates a first mechanical connection with one of the components of the freewheel and a second mechanical connection with the shaft (4) or with one of the cranks (16, 16'); and **in that** at least one of the two mechanical connections can be disconnected in such a way as to remove the shaft (4).

3. Device according to one of the preceding claims, **characterized in that** the transmission ring (44, 44') is positioned in the vicinity of the right crank (16) and the disconnectable mechanical connection is the one between the ring and one of the components of the freewheel.

4. Device according to the preceding claim, **characterized in that** the freewheel comprises at least one ratchet pawl (61) capable of coming into abutment on the teeth (652) of a ratchet wheel (65) and **in that** the ratchet wheel (65) can be secured to the transmission ring (44) by splines (654, 441).

5. Device according to the preceding claim, **characterized in that** the transmission ring comprises a splined portion (441) and a portion of frustoconical shape (442).

6. Device according to the preceding claim, **characterized in that** the transmission ring (44) is fixed to the shaft (4) by bonding, shrink-fitting or radial binding screws.

7. Device according to the preceding claim, **characterized in that** the transmission ring (44') comprises a cylindrical portion (443) intended to surround the shaft (4) and a radial arm (444) extending from the cylindrical portion (443), said radial arm (444) comprising means of blocking with the right crank (16).

8. Device according to one of Claims 1 and 2, **characterized in that** the transmission ring (44", 44''') is placed in the vicinity of the left crank (16') and the disconnectable mechanical connection is the one between the ring (44'', 44''' ) and the shaft (4) or the left crank (16').

9. Device according to the preceding claim, **characterized in that** the transmission ring (44", 44''') comprises a first portion (448) comprising a tooth set of which each of the teeth (4481) is able to come into contact with a ratchet pawl (61) of the freewheel (60) and a second portion (449) comprising means for blocking the rotation with the left crank (16') or with the shaft (4) .

10. Device according to the preceding claim, **characterized in that** the rotation blocking means comprise a key (4491).

11. Device according to Claim 9, **characterized in that** the rotation blocking means comprise internal splines (4492) able to collaborate with external splines (452) formed on the shaft (4).

12. Device according to one of the preceding claims, **characterized in that** the shaft (4) and the right crank (16) constitute an independent subassembly that can be disassembled from the device without the need to remove the ball bearings (224, 234) of the device.

13. Device according to one of the preceding claims, **characterized in that** the shaft (4) has a diameter D4 that is substantially constant over its entire length and **in that** this diameter is less than or equal to the inside diameter D224 of the ball bearing (224) placed in the vicinity of the right crank (16).

Fig. 1

Fig.2

Fig.3 (A-A)

Fig.4 (B-B)

Fig. 5a

Fig.5b

Fig.6 (C-C)

Fig.7

Fig.8

Fig.9

Fig.10

Fig.11 (D-D)

Fig.12 (E-E)

Fig.13 (F-F)

Fig.14

Fig.15

27

Fig. 16

Fig. 17

Fig. 18

Fig.19

Fig.20

## RÉFÉRENCES CITÉES DANS LA DESCRIPTION

**Documents brevets cités dans la description**

- US 9616969 B
- US 8757311 B
- EP 2502819 A
- WO 2016128789 A
- GB 2312403 A
- WO 2010051681 A1
- CN 2240486 Y
- CN 201161693 Y
- EP 0743238 A1
- EP 1449760 A
- EP 2724926 A